# EUROPEAN PATENT APPLICATION

(11) **EP 3 104 286 A1**
(43) Date of publication of application: **14.12.2016**
(21) Application number: 16173556.8
(22) Date of filing: 08.06.2016
(51) Int. Cl.: G06F 17/30

(54) **DATA LOCALISATION PROCESS SYSTEM, DATA LOCALISATION PROCESS APPARATUS, AND DATA LOCALISATION PROCESS METHOD**

(30) Priority: 10.06.2015 JP 2015117130; 12.06.2015 JP 2015118849; 08.02.2016 JP 2016022202
(71) Applicant: Ricoh Company, Ltd., Tokyo 143-8555 (JP)
(72) Inventor: TOKIWA, Masafumi, Ohta-ku, Tokyo 143-8555 (JP)
(74) Representative: Watkin, Timothy Lawrence Harvey

(57) **Abstract**

A data process system including one or more data process apparatuses that provides screen data to a browser installed in an electronic device. The data process system includes an obtaining unit that obtains localization data corresponding to designated language data from an external service providing system that manages localization data associated with language data, and a management unit configured to provide the screen data and the localization data to the browser. The browser includes a reflecting unit that reflects the localization data to the screen data.

## Description

### BACKGROUND OF THE INTENTION

### 1. Field of the Invention

The present invention relates to a data process system, a data process apparatus, and a data process method.

### 2. Description of the Related Art

In recent years, a technology referred to as "software localization" has become known. Software localization (hereinafter simply referred to as "localization") is a technology that allows software (e.g., web application) to be adapted to various languages and regions by way of a single program.

One known example of the localization technology is an XML (Extensible Markup Language) format of localization data. Localization data using an XML schema implements a localization data format that provides consistency, extensibility, and flexibility (see, for example, Japanese National Publication of International Patent Application No. 2009-508268).

Conventionally, it is necessary to retain localization data corresponding to each language within the software (e.g., web application) in order to implement localization of the software. Thus, in order to implement localization, software requires to be updated whenever a corresponding language is added.

### SUMMARY OF THE INTENTION

The present invention may provide a data process system, a data process apparatus, and a computer-readable recording medium that substantially obviates one or more of the problems caused by the limitations and disadvantages of the related art.

Features and advantages of the present invention are set forth in the description which follows, and in part will become apparent from the description and the accompanying drawings, or may be learned by practice of the invention according to the teachings provided in the description. Objects as well as other features and advantages of the present invention will be realized and attained by a data process system, a data process apparatus, and a computer-readable recording medium particularly pointed out in the specification in such full, clear, concise, and exact terms as to enable a person having ordinary skill in the art to practice the invention.

To achieve these and other advantages and in accordance with the purpose of the invention, as embodied and broadly described herein, an embodiment of the present invention provides a data process system including one or more data process apparatuses that provides screen data to a browser installed in an electronic device. The data process system includes first and second processors. The first processor executes a process including obtaining localization data corresponding to designated language data from an external service providing system that stores localization data associated with language data, and providing the screen data and the localization data to the browser. The second processor causes the browser to reflect the localization data to the screen data and display the screen in accordance with the reflected screen data.

Other objects, features and advantages of the present invention will become more apparent from the following detailed description when read in conjunction with the accompanying drawings.

### BRIEF DESCRIPTION OF THE DRAWINGS

Fig. 1 is a schematic diagram illustrating a data process system according to an embodiment of the present invention;
Fig. 2 is a schematic diagram of a hardware configuration of a computer according to an embodiment of the present invention;
Fig. 3 is a schematic diagram illustrating a hardware configuration of an MFP (Multi-Function Peripheral) according to an embodiment of the present invention;
Fig. 4 is a block diagram of a data process system according to the first embodiment of the present invention;
Fig. 5 is a schematic diagram illustrating a process of reflecting localization data to a web page screen according to an embodiment of the present invention;
Fig. 6 is a sequence diagram of a process for reflecting localization data to a web page screen according to the first embodiment of the present invention;
Fig. 7 is a schematic diagram illustrating a process of converting a data format of localization data according to an embodiment of the present invention;
Figs. 8A and 8B are schematic diagrams, each of which illustrating an image of a web page screen that displays a message of each language data;
Fig. 9 is a block diagram of a data process system according to the second embodiment of the present invention;
Fig. 10 is a schematic diagram illustrating a process of reflecting localization data to a web page screen according to an embodiment of the present invention;
Fig. 11 is a sequence diagram of a process for reflecting localization data to a web page screen according to the second embodiment of the present invention;
Fig. 12 is a block diagram of a data process system according to the third embodiment of the present invention;
Fig. 13 is a schematic diagram illustrating a process of reflecting localization data to a web page screen according to an embodiment of the present invention;
Fig. 14 is a sequence diagram of a process for reflecting localization data to a web page screen according to the third embodiment of the present invention;
Fig. 15 is a schematic diagram illustrating a data process system according to the fourth embodiment of the present invention;
Fig. 16 is a block diagram of a data process system according to the fourth embodiment of the present invention;
Fig. 17 is a flowchart illustrating procedures of installing a web service according to an embodiment of the present invention;
Fig. 18 is a sequence diagram illustrating an initial setting process and a job setting process according to an embodiment of the present invention;
Fig. 19 is a schematic diagram illustrating a process of using a web service according to the fourth embodiment of the present invention;
Fig. 20 is a sequence diagram illustrating a process of using a web service according to the fourth embodiment of the present invention;
Fig. 21 is a table illustrating a configuration of external service data (external service data table) according to an embodiment of the present invention;
Fig. 22 is a schematic diagram illustrating an example of a spreadsheet in which job setting data is registered;
Fig. 23 is a schematic diagram illustrating an example of buttons for enabling a user to select a job;
Fig. 24 is a schematic diagram illustrating a configuration of a reverse-multilingual association data according to an embodiment of the present invention;
Fig. 25 is a schematic diagram illustrating a process of reflecting job setting data to parameters of a job according to an embodiment of the present invention;
Fig. 26 is a block diagram of a data process system according to the fifth embodiment of the present invention;
Fig. 27 is a schematic diagram illustrating a process of using a web service according to the fifth embodiment of the present invention;
Fig. 28 is a sequence diagram illustrating a process of using a web service according to the fifth embodiment of the present invention;
Fig. 29 is a block diagram of a data process system according to the sixth embodiment of the present invention;
Fig. 30 is a schematic diagram illustrating a process of using a web service according to the sixth embodiment of the present invention; and
Fig. 31 is a sequence diagram illustrating a process of using a web service according to the sixth embodiment of the present invention.

### DETAILED DESCRIPTION OF THE PREFERRED EMBODIMENTS

Embodiments of the present invention are described in detail below.

### [First embodiment]

### <System configuration>

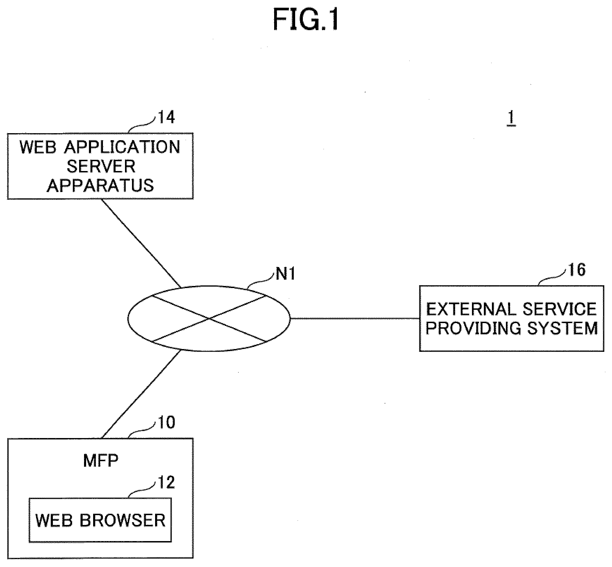

Fig. 1 is a schematic diagram illustrating a data process system 1 according to an embodiment of the present invention. The data process system 1 includes an MFP (Multi-Function Peripheral) 10, a web application server apparatus 14, and an external service providing system 16 that are connected to each other via a network (e.g., the Internet) N1.

The MFP 10 is an example of an electronic device. The electronic device may be an image forming apparatus such as a multi-function machine, a scanner, a printer, a facsimile machine, a projector, an electronic blackboard, or any other electronic device installed with a web browser 12. Further, the electronic device may be a PC (Personal Computer), a tablet type terminal, a smartphone, a mobile phone, or a PDA (Personal Digital Assistant) each of which installed with the web browser 12.

The web application server apparatus 14 provides a web page screen to the web browser 12 of the MFP 10 via the network N1. The external service providing system 16 provides services such as an online storage service via the network N1. Note that a service (e.g., cloud service) provided by the external service providing system 16 is referred to as an external service in the below-described embodiments.

The network N1 of the data process system 1 of Fig. 1 may be a wireless network or a cable (wired) network. The system configuration of the data process system 1 illustrated in Fig. 1 is merely one example. The data process system 1 may have, for example, the web application server 14 being divided into multiple computers. Further, the external service providing system 16 may be formed of one or more computers.

### <Hardware configuration>

### <<Computer>>

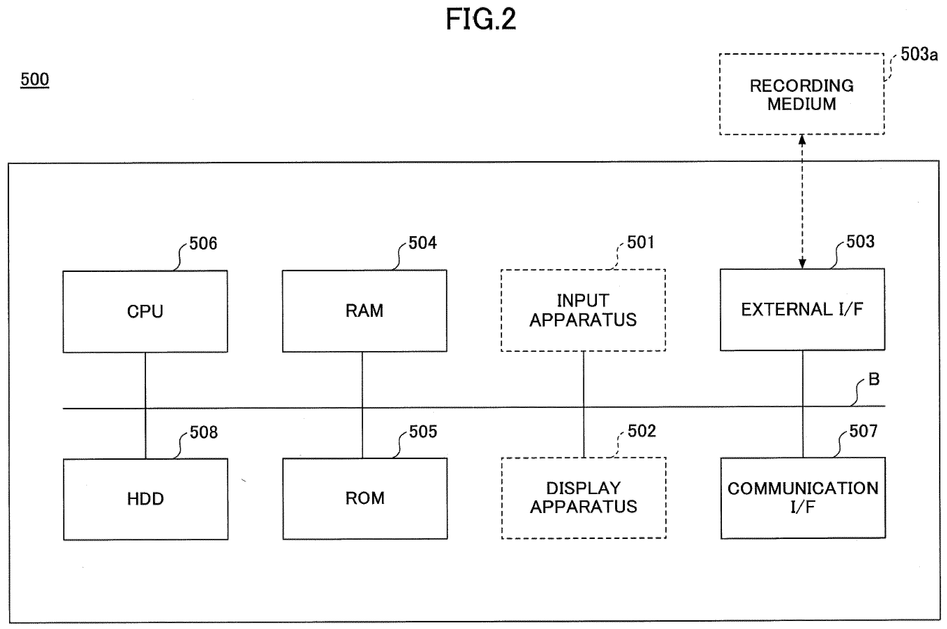

Each of the web application server apparatus 14 and the external service providing system 16 may be implemented by a hardware configuration illustrated in Fig. 2. Fig. 2 is a schematic diagram of a hardware configuration of a computer 500 according to an embodiment of the present invention.

The computer of Fig. 2 includes, for example, an input apparatus 501, a display apparatus 502, an external I/F (interface) 503, a RAM (Random Access Memory) 504, a ROM (Read-only Memory) 505, a CPU (Central Processing Unit) 506, a communication I/F 507, and an HDD (Hard Disk Drive) 508 that are connected to each other via a bus B. The input apparatus 501 and the display apparatus 502 may be connected to the computer 500 only when needed.

The input apparatus 501 includes, for example, a keyboard, a mouser, or a touch panel that allows a user to input various operation signals. The display apparatus 502 may be a display that display process results of the computer 500.

The communication I/F 507 is an interface that connects the computer 500 to various networks. Thereby, the computer 500 can perform data communication by way of the communication I/F 507.

The HDD 508 is an example of a non-volatile storage apparatus that stores programs and data. The programs and data stored in the HDD 508 may be an OS (basic software) that controls the entire computer 500 and application software (hereinafter also simply referred to as "application") that provides various functions with the OS. Alternatively, the computer 500 may use a drive device using a flash memory as a recording medium (e.g., SSD, Solid State Drive) instead of the HDD 508.

The external I/F 503 is an interface between the computer 500 and an external device. The external device may be, for example, a recording medium 503a. Accordingly, the computer 500 can read data from the recording medium 503a and/or write data to the recording medium 503a by way of the external I/F 503. The recording medium 503a may be, for example, a flexible disk, a CD (Compact Disc), a DVD (Digital Versatile Disk), an SD (Secure Digital) memory card, or a USB (Universal Serial Bus) memory.

The ROM 505 is an example of a non-volatile semiconductor memory (storage device) that can retain programs and data even after the electric power of the computer 500 is turned off. Programs and data pertaining to, for example, a BIOS that is executed when the computer 500 is activated, the

OS settings, and the network settings are stored in the ROM 505. The RAM 504 is an example of a volatile semiconductor memory (storage device) that temporarily retains programs and data.

The CPU 506 is an arithmetic device that implements the controls of the entire computer 500 and the functions of the computer 500 by executing a process of a program or data that is read out from a storage device (e.g., ROM 505, HDD 508) and loaded to the RAM 504.

The web application server apparatus 14 and the external service providing system 16 implement each of the below-described processes by using the CPU 506 along with the hardware configuration illustrated in Fig. 2.

### <<MFP>>

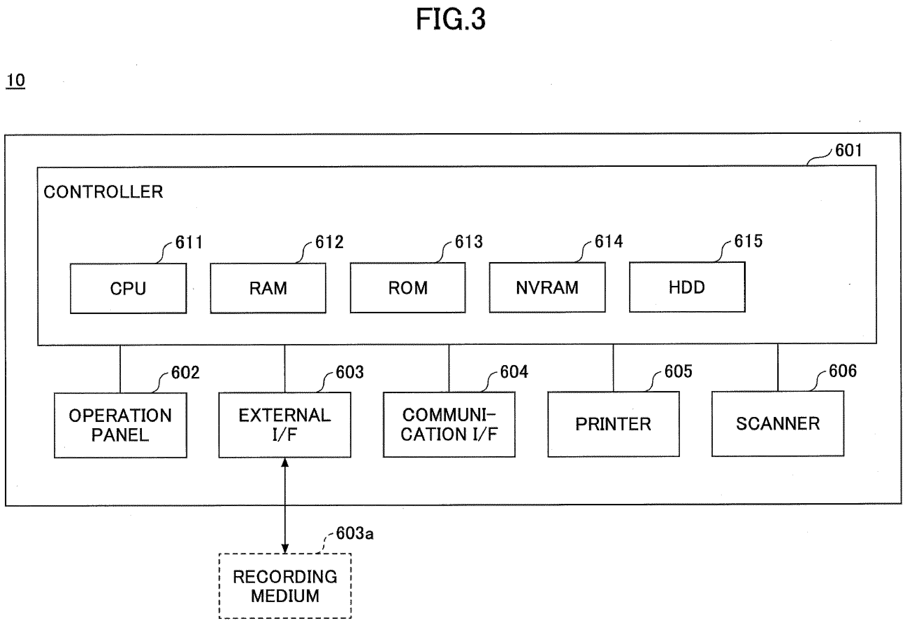

The MFP 10 of Fig. 1 may be implemented by a hardware configuration illustrated in Fig. 3. Fig. 3 is a schematic diagram illustrating a hardware configuration of the MFP 10 according to an embodiment of the present invention. The MFP 10 of Fig. 3 includes a controller 601, an operation panel 602, an external I/F 603, a communication I/F 604, a printer 605, and a scanner 606.

The controller 601 includes a CPU 611, a RAM 612, a ROM 613, an NVRAM (Non-Volatile Random-Access Memory) 614, and an HDD 615. The ROM 613 retains various programs and data. The RAM 612 temporarily retains programs and data. The NVRAM 614 retains, for example, setting data. The HDD 615 retains various programs and data.

The CPU 611 implements the controls of the entire MFP 10 and the functions of the MFP 10 by executing a process of a program, data, or setting data read out from the ROM 613, NVRAM 614, or the HDD 615 and loaded to the RAM 612.

The operation panel 602 includes an input unit that receives input from a user and a display unit that displays data. The external I/F 603 is an interface between the MFP 10 and an external device. The external device may be, for example, a recording medium 603a. Accordingly, the MFP 10 can read data from the recording medium 603a and/or write data to the recording medium 603a by way of the external I/F 603. The recording medium 603a may be, for example, an IC card, a flexible disk, a CD, a DVD, an SD memory card, or a USB memory.

The communication I/F 604 is an interface that connects the MFP 10 to the network N1. Accordingly, the MFP 10 can perform data communication by way of the communication I/F. The printer 605 is a printing machine that prints data to a sheet of paper. The scanner 606 is a reading machine that reads out image data (electronic data) from a document (manuscript).

### <Software configuration>

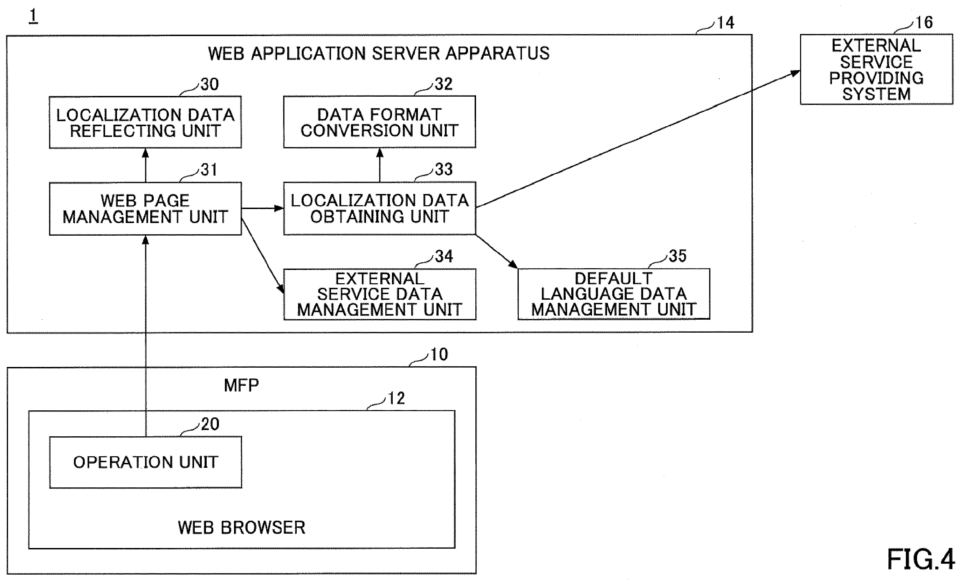

The MFP 10, the web application server apparatus 14, and the external service providing system 16 are implemented by the functional blocks illustrated in Fig. 4. Fig. 4 is a block diagram of the data process system 1 according to the first embodiment of the present invention.

The MFP 10 included in the data process system 1 illustrated in Fig. 4 implements the operation unit 20 by using the CPU 611 that executes a program recorded in a memory such as the ROM 613, the NVRAM 614, or the HDD 615. Further, the web application server 14 implements a localization data reflecting unit 30, a web page management unit 31, a data format converting unit 32, a localization data obtaining unit 33, an external service data management unit 34, and a default language data management unit 35 by using the CPU 506 that executes a program recorded in a memory such as the HDD 508 or the ROM 505.

The operation unit 20 of the MFP 10 receives (accepts) various instructions from the user operating on the operation panel 602. For example, in a case where the operation unit 20 receives a user's instruction to obtain web page screen data (hereinafter also simply referred to as "web page screen") from the web application server apparatus 14, the MFP 10 obtains web page screen from the web application server apparatus 14 and displays the web page screen on the control panel 602.

Further, the localization data reflecting unit 30 of the web application server apparatus 14 reflects localization data on the web page screen. Note that the localization data includes data that allows software (e.g., web application) to be adapted to various languages and regions by way of a single program. The web page management unit 31 receives a request to obtain a web page screen from the MFP 10, obtains a web page screen having the localization data reflected thereto, and provides the web page screen to the MFP 10.

Further, the data format conversion unit 32 converts localization data provided from the external service providing system 16 and converts the localization data into a format that can be reflected to the web page screen. A localization obtaining unit 33 obtains the localization data from the external service providing system 16.

The external service data management unit 34 manages external service data described below. The external service data management unit 34 provides external service data based on the request to obtain web page screen data from the web page management unit 31. A default language data management unit 35 provides default language data based on a request to obtain localization data from the localization data obtaining unit 33.

### <Details of processes>

Next, the processes of the data process system 1 according to the first embodiment of the present invention are described in detail.

### <<Reflecting localization data to web page screen>>

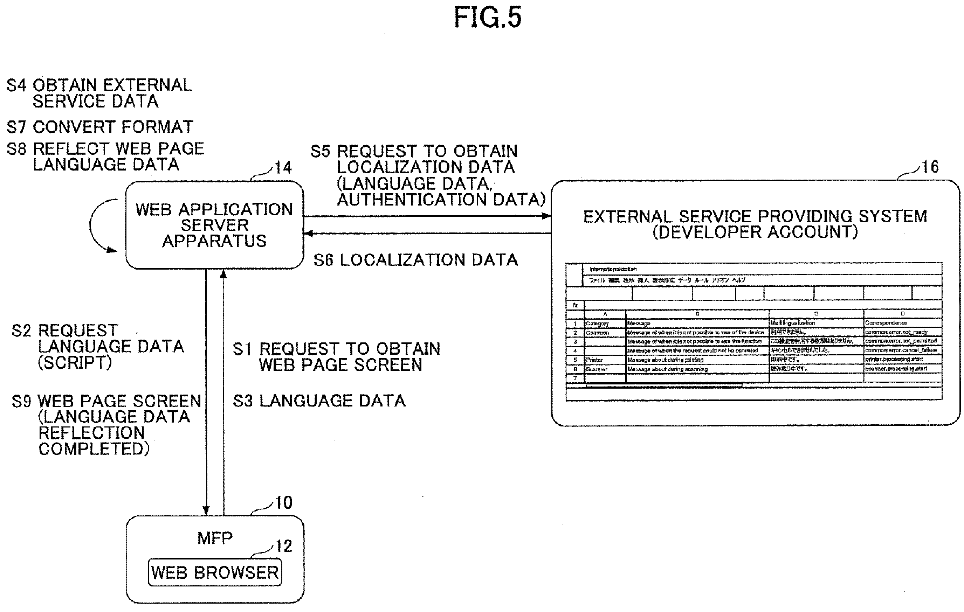

A process of reflecting localization data to a web page screen is performed by the procedures illustrated in Fig. 5. Fig. 5 is a schematic diagram illustrating a process of reflecting localization data to a web page screen. Note that Fig. 5 illustrates a case where the web application server apparatus 14 obtains localization data, converts data format, and reflects localization data to the web page screen.

When the MFP receives an instruction to obtain a web page screen from a user, the web browser 12 of the MFP 10 requests the web application server apparatus 14 to obtain the web page screen in Step S1.

In Step S2, the web application server apparatus 14 requests the web browser 12 of the MFP 10 for language data (language data request). Note that the language data request includes a script for obtaining language data set to the MFP 10. More specifically, the web browser 12 obtains language data set to the MFP 10 by executing the script included in the language data request. Accordingly, in a case where the web browser 12 is a general-purpose browser, the web browser 12 receiving the language data request from the web application server apparatus 14 uses the script included in the language data request. In a case where the web browser 12 is developed to be a dedicated web browser for a specialized purpose, a function of obtaining language data that is set to the MFP 10 may be provided in the web browser 12.

In Step S3, the web browser 12 transmits the language data set to the MFP 10 to the web application server apparatus 14 in response to the request from the web application server apparatus 14. In Step S4, the web application server apparatus 14 obtains external service data. The external service data includes a URL of the external service providing system 16 and authentication data of a developer's account (developer account). The URL of the external service providing system 16 is an example of connection destination data of the external service providing system 16. The authentication data of the developer account is an example of data required for the use of the external service providing system 16.

In Step S5, the web application server apparatus 14 designates language data and authentication data and transmits a request to obtain localization data to the URL of the external service providing system 16. It is to be noted that, in a case where the authority to browse the external service providing system 16 is set to be available to the public, the designating of authentication data in the process of requesting to obtain localization data in Step S5 may be omitted.

In Step S6, the external service providing system 16 provides localization data corresponding to the language data designated in Step S5 to the web application server apparatus 14. In a case where localization data corresponding to the language data designated in Step S5 cannot be obtained in Step S6, the web application server apparatus 14 obtains localization data of a default language (e.g., English) from the external service providing system 16.

In Step S7, the web application server apparatus 14 converts the localization data obtained from the external service providing system 16 into a data format that can be reflected to a web page screen. In Step S8, the web application server apparatus 14 reflects the format-converted localization data to a web page screen.

In Step S9, the web application server apparatus 14 provides the web page screen to which localization data is reflected (language data reflected to web page screen) to the web browser 12 of the MFP 10.

Accordingly, the web browser 12 can display a web page screen to which localization data is reflected (language data reflected to web page screen) as illustrated in Fig. 5.

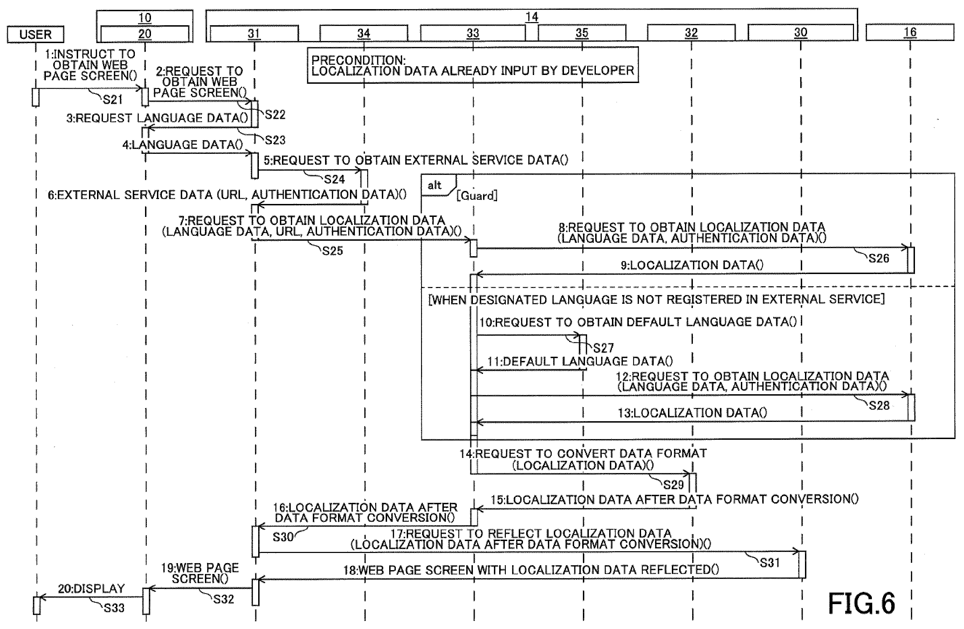

Fig. 6 is a sequence diagram of a process for reflecting localization data to a web page screen according to the first embodiment of the present invention. In the sequence diagram of Fig. 6, it is a precondition that localization data is already input by a developer of the external service providing system 16.

In Step S21, the operation unit 20 of the MFP 10 receives an instruction to obtain web page data from the user. In Step S22, the operation unit 20 requests the web page management unit 31 of the web application server apparatus 14 to obtain the web page data. In Step S23, the web page management unit 31 of the web application server apparatus 14 requests the operation unit 20 of the MFP 10 to acquire language data, and obtains the language data that is set to the MFP 10 from the MFP 10.

In Step S24, the web page management unit 31 requests the external service data management unit 34 to obtain external service data, and obtains the external service data from the external service data management unit 34. The external service data includes a URL of the external service providing system 16 and authentication data.

In Step S25, the web page management unit 31 designates language data, the URL, and the authentication data and requests the localization data obtaining unit 33 to obtain localization data. In Step S26, the localization data obtaining unit 33 designates the language data and the authentication data and transmits a request to obtain localization data to the URL of the external service providing system 16. Then, the localization data obtaining unit 33 obtains localization data of the designated language data from the external service providing system 16.

It is to be noted that, in a case where the localization data of the designated language data is not registered in the external service providing system 16, the localization data obtaining unit 33 requests the default language data management unit 35 to obtain default language data in Step S27. Then, the localization data obtaining unit 33 obtains the default language data from the default language data management unit 35.

In Step S28, the localization data obtaining unit 33 designates the default language data and the authentication data and transmits a request to obtain localization data to the URL of the external service providing system 16. Then, the localization data obtaining unit 33 obtains the localization data of the default language from the external service providing system 16.

In Step S29, the localization data obtaining unit 33 requests the data format converting unit 32 to convert the data format of the localization data obtained from the external service providing system 16. The data format converting unit 32 converts the localization data obtained from the external service providing system 16 into a data format that can be reflected to the web page screen.

Then, the data format converting unit 32 provides the localization data converted into a data format that can be reflected to a web page screen (localization data after its data format is converted) to the localization data obtaining unit 33. In Step S30, the localization data obtaining unit 33 provides the localization data after its data format is converted to the web page management unit 31.

Further, in Step S31, the web page management unit 31 designates the format-converted localization data and requests the localization data reflecting unit 30 to reflect the localization data to a web page screen.

Accordingly, the localization data reflecting unit 30 reflects the format-converted localization data to the web page screen. Then, the localization data reflecting unit 30 transmits the web page screen to which the localization data is reflected (localized web page screen) to the web page management unit 31.

In Step S32, the web page management unit 31 transmits the localized web page screen to the operation unit 20 of the MFP 10. In Step S33, the operation unit 20 displays the localized web page screen.

In a case where localization data of the language data designated in Step S25 is cached in the localization data obtaining unit 33, the processes of Steps S26 to S28 may be omitted. In this case, the localization data obtaining unit 33 may use the cached localization data.

Further, in a case where the format-converted localization data is cached in the localization data obtaining unit 33, the processes of Steps S26 to S29 may be omitted. In this case, the localization data obtaining unit 33 may use the format-converted localization data.

### <<Data format conversion of localization data>>

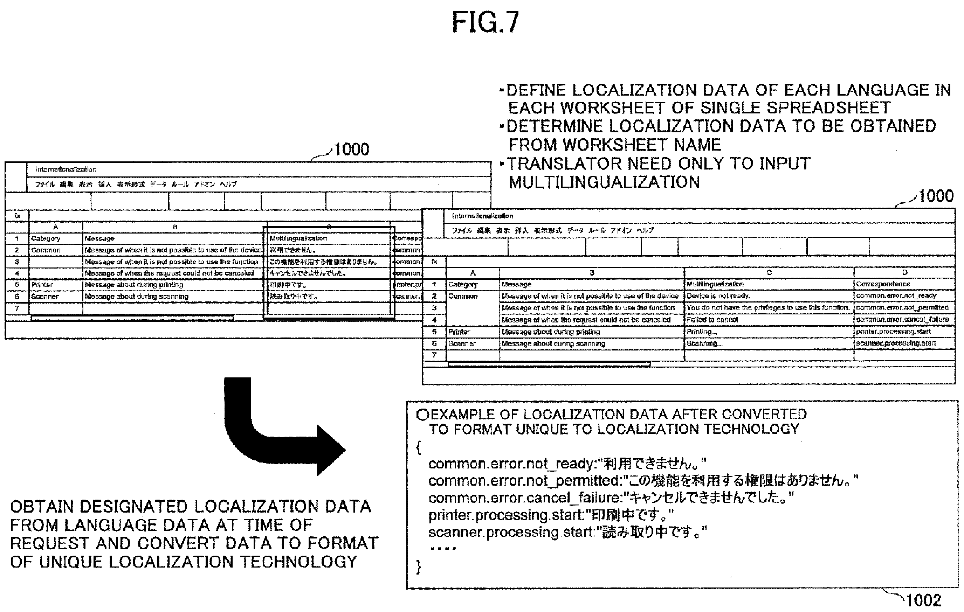

Fig. 7 is a schematic diagram illustrating a process of converting a data format of localization data according to an embodiment of the present invention. The external service providing system 16 can read out localization data corresponding to each language data from, for example, a spreadsheet 1000 that is identified by a URL. In the spreadsheet 1000 of Fig. 7, localization data of each language data is defined in each worksheet of the spreadsheet 1000.

In Fig. 7, the spreadsheet 1000 on the left side of Fig. 7 indicates a worksheet corresponding to language data "Japanese". Further, the spreadsheet on the right side of Fig. 7 indicates a worksheet corresponding to language data "English". In the spreadsheet 1000 of Fig. 7, each language data of localization data can be distinguished by the name of a worksheet.

The spreadsheet 1000 of Fig. 7 includes items such as "Category", "Message", "Multilingualization", and "Correspondence". The item "Category" indicates a category of a message. The item "Message" indicates the content of a message. The item "Multilingualization" indicates a message corresponding to language data. Further, the item "Multilingualization" is the message that is displayed on the web page screen. Further, the item "Correspondence" serves as data for distinguishing a message that is defined in the web page screen.

In a case of using the spreadsheet of Fig. 7, a translator need only to input the item "Multlingualization", and the other items of the spreadsheet 1000 are input by the developer. For example, in a case where Japanese is designated as the language data, the web application server 14 obtains localization data of a worksheet displayed on the spreadsheet (left side in Fig. 7) from the external service providing system 16. The web application server apparatus 14 converts the obtained localization data into localization data 1002 having a format that can be reflected to a web page screen.

In this example, the localization data 1002 having a data format that can be reflected to a web page screen includes data that identifies a message defined in the web page screen (message identifying data) and a Japanese message associated with the message identifying data.

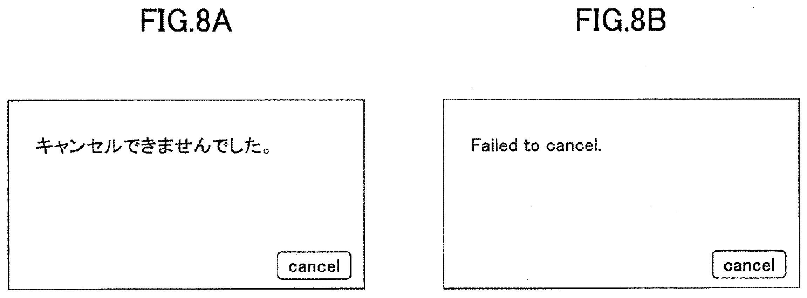

By reflecting the format-converted localization data 1002 to a web page screen, the web application server apparatus 14 allows a Japanese message to be displayed on a Japanese web page screen as illustrated Fig. 8A. Similar to above-described procedures where Japanese is designated as the language data, the web application server apparatus 14 allows an English message to be displayed on an English web page screen as illustrated in Fig. 8B. Figs. 8A and 8B are schematic diagrams, each of which illustrating an image of a web page screen that displays a message of each language data (in this example, Japanese and English).

Accordingly, a translator or the like that cannot even understand the localization data after being format-converted can input a message corresponding to each language data of localization data by using the spreadsheet illustrated in Fig. 7.

By defining localization data in a spreadsheet of the external service providing system 16 as described above in the first embodiment of the present invention, the web application server apparatus 14 can obtain the spreadsheet from the external service providing system 16 and use the spreadsheet. Therefore, according to the above-described first embodiment of the present invention, localization of new language data can be achieved by adding localization data of the new language data to the spreadsheet of the external service providing system 16. Hence, localization can be achieved without having to update the software of the web application server apparatus 14.

Further, even in a case where a translator or the like does not understand the localization data after the data format of localization data is converted, localization data is defined beforehand in a spreadsheet of the external service providing system 16. Therefore, the workload of a developer can be reduced by allowing a message displayed on a web page screen to be changed by the user.

### [Second embodiment]

In the first embodiment, the web application server apparatus 14 performs the processes of obtaining localization data, converting the data format of the localization data, and reflecting the format-converted localization data to a web page screen. In the below-described second embodiment, the process of reflecting format-converted localization data to a web page screen is performed by the MFP 10. In the second embodiment, like components and parts are denoted with like reference numerals as the reference numerals of the first embodiment and are not further explained.

### <Software configuration>

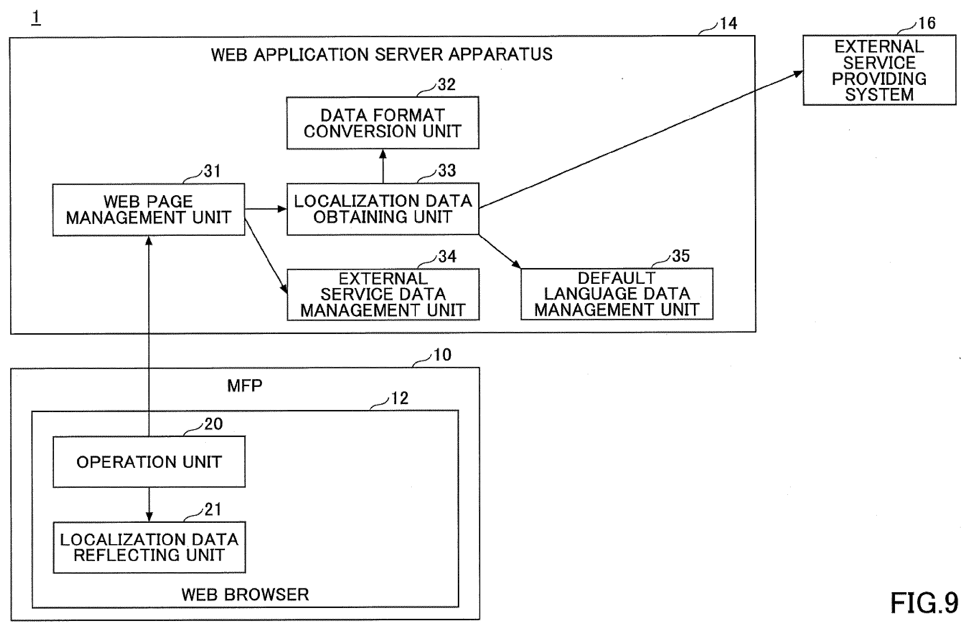

The MFP 10, the web application server apparatus 14, and the external service providing system 16 according to the second embodiment of the present invention are implemented by the functional blocks illustrated in Fig. 9. Fig. 9 is a block diagram of the data process system 1 according to the second embodiment of the present invention.

Unlike the software configuration illustrated in Fig. 4, the web application server apparatus 14 does not include the localization data reflecting unit 30. Further, the localization data reflecting unit 21 is added to the MFP 10 as illustrated in the block diagram of Fig. 9. Thus, the differences between the block diagram of Fig. 4 and the block diagram of Fig. 9 are described below. The MFP 10 included in the data process system 1 illustrated in Fig. 9 implements the operation unit 20 and the localization data reflecting unit 21 by using the CPU 611 that executes a program recording in a memory such as the ROM 613, the NVRAM 614, or the HDD 615.

The web page management unit 31 of the web application server apparatus 14 provides a web page screen to which localization data is not yet reflected and format-converted localization data to the MFP 10. The localization data reflecting unit 21 of the MFP 10 reflects the format-converted localization data to a web page screen.

### <Details of processes>

Next, the differences between the processes of the data process system 1 of the first embodiment and the processes of the data process system 1 of the second embodiment are described in detail.

### <<Reflecting localization data to web page screen>>

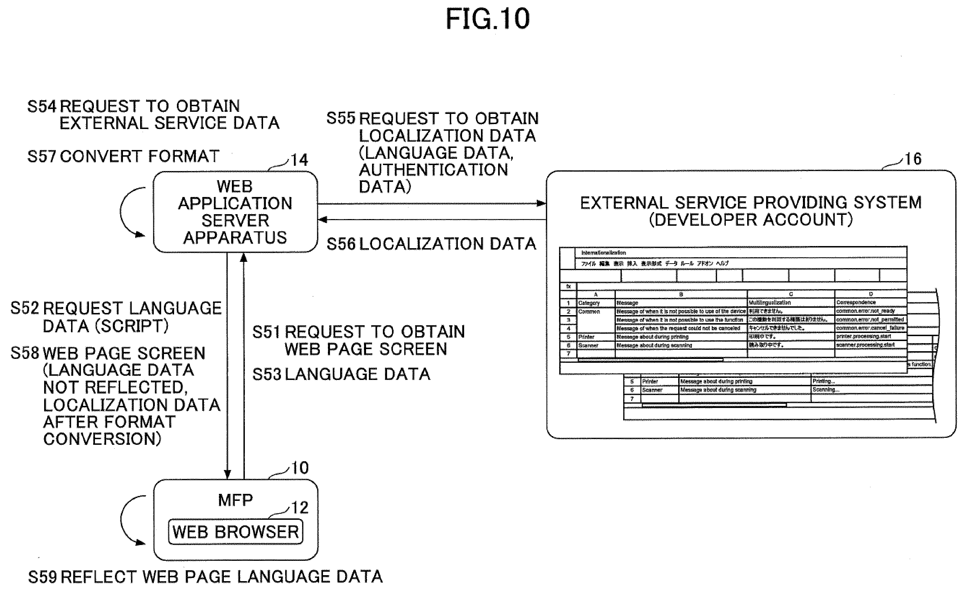

A process of reflecting localization data to a web page screen is performed by the procedures illustrated in Fig. 10. Fig. 10 is a schematic diagram illustrating a process of reflecting localization data to a web page screen. Note that Fig. 10 differs from Fig. 5 in that the MFP 10 reflects localization data to a web page screen.

Because the processes of Steps S51 to S57 are the same as the processes of Steps S1 to S7 of Fig. 5, further explanation of the processes performed in Steps S51 to S57 is omitted. In Step S58, the web application server apparatus 14 provides a web page screen to which localization data is not yet reflected and format-converted localization data to the web browser 12 of the MFP 10. In Step S59, the web browser 12 of the MFP 10 reflects the format-converted localization data to the web page screen.

Accordingly, the web browser 12 displays a web page screen to which localization data is reflected (language data reflected to web page screen) as illustrated in Fig. 10.

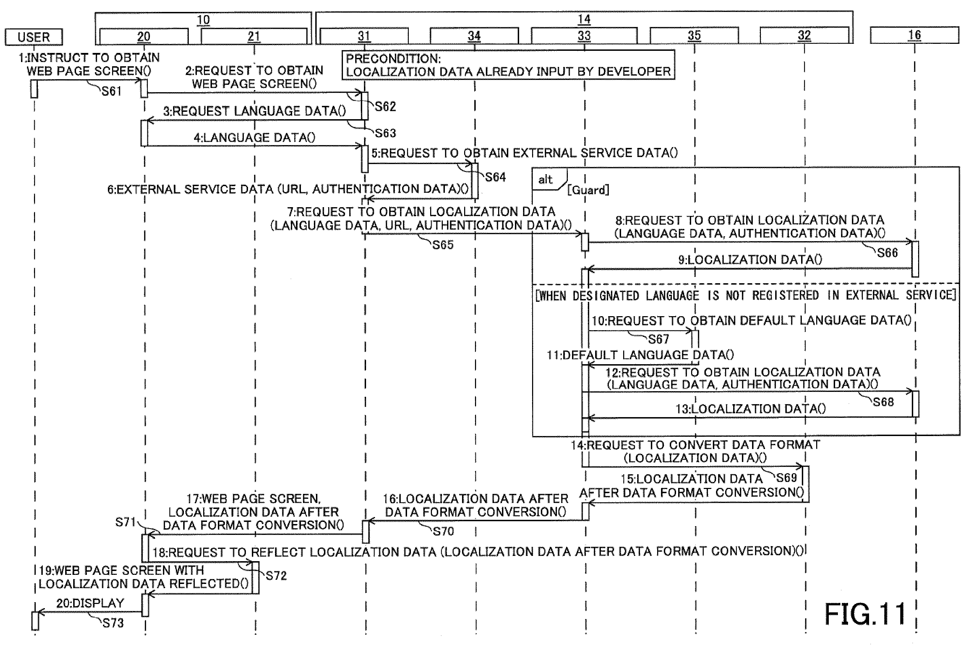

Fig. 11 is a sequence diagram of a process for reflecting localization data to a web page screen according to the second embodiment of the present invention. Because the processes of Steps S61 to S70 are the same as the processes of Steps S61 to S70 of Fig. 6, further explanation of the processes performed in Steps S61 to S70 is omitted.

In Step S71, the web page management unit 31 sends a web page screen to which localization data is not reflected and format-converted localization data to the operation unit 20 of the MFP 10.

In Step S72, the operation unit 20 designates the format-converted localization data and requests the localization data reflecting unit 21 to reflect the format-converted localization data to a web page screen.

Then, the localization data reflecting unit 21 reflects the format-converted localization data to the web page screen. Then, the localization data reflecting unit 21 sends the web page screen to which the format-converted localization data is reflected to the operation unit 20. In Step S73, the operation unit 20 displays the web page screen to which the format-converted localization data is reflected.

Unlike the first embodiment in which the web application server 14 reflects localization data to a web page screen, the MFP 10 of the second embodiment reflects localization data to a web page screen. Further, by performing the processes in the above-described second embodiment, a part of a dynamic screen using Ajax (Asynchronous JavaScript+XML) can be updated.

### [Third embodiment]

In the first embodiment, the web application server apparatus 14 performs the processes of obtaining localization data, converting the data format, and reflecting the format-converted localization data to a web page screen. In the below-described third embodiment, the process of reflecting format-converted localization data to a web page screen is performed by the MFP 10. In the third embodiment, like components and parts are denoted with like reference numerals as the reference numerals of the first embodiment and are not further explained.

### <Software configuration>

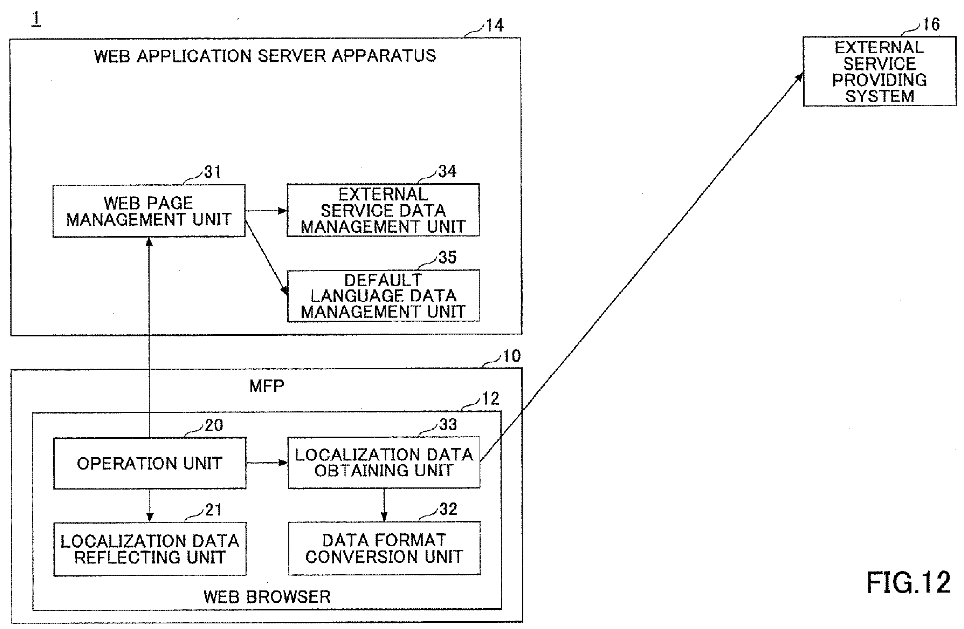

The MFP 10, the web application server apparatus 14, and the external service providing system 16 according to the third embodiment of the present invention are implemented by the functional blocks illustrated in Fig. 12. Fig. 12 is a block diagram of the data process system 1 according to the third embodiment of the present invention.

Unlike the software configuration illustrated in Fig. 4, the web application server apparatus 14 does not include the localization data reflecting unit 30, the data format converting unit 32, and the localization data obtaining unit 33. Further, unlike the software configuration illustrated in Fig. 4, the localization data reflecting unit 21, the localization data obtaining unit 22, and the data format converting unit 23 are added to the MFP 10 as illustrated in the block diagram of Fig. 12. Thus, the differences between the block diagram of Fig. 4 and the block diagram of Fig. 12 are described below.

The MFP 10 included in the data process system 1 illustrated in Fig. 12 implements the operation unit 20, the localization data reflecting unit 21, the localization data obtaining unit 22, and the data format converting unit 23 by using the CPU 611 that executes a program recording in a memory such as the ROM 613, the NVRAM 614, or the HDD 615.

The web management unit 31 of the web application server apparatus 14 provides a web page screen to which localization data is not yet reflected, external service data, default language data, and a script to the MFP 10.

The localization data reflecting unit 21 reflects format-converted localization data to the web page screen. The localization data obtaining unit 22 obtains localization data from the external service providing system 16. The data format converting unit 23 converts the localization data provided from the external service providing system 16 into localization data having a data format that can be reflected to the web page

### screen.

### <Details of processes>

Next, the differences between the processes of the data process system 1 of the first embodiment and the processes of the data process system 1 of the third embodiment are described in detail.

### <<Reflecting localization data to web page screen>>

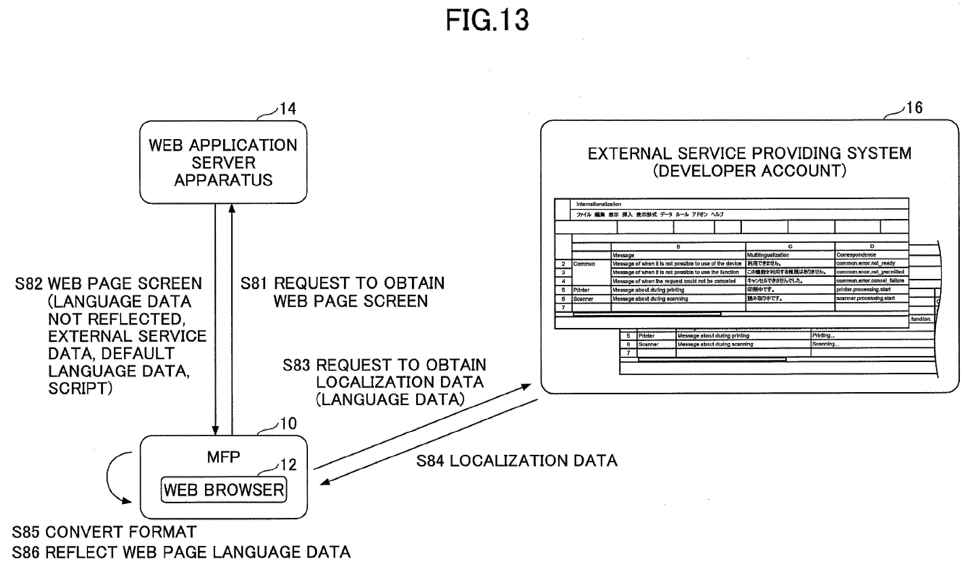

A process of reflecting localization data to a web page screen is performed by the procedures illustrated in Fig. 13. Fig. 13 is a schematic diagram illustrating a process of reflecting localization data to a web page screen. Note that Fig. 13 differs from Fig. 5 in that the MFP 10 performs the processes of obtaining localization data, converting the data format of the localization data, and reflecting the format-converted localization data to a web page screen.

In Step S81, the web browser 12 of the MFP 10 requests the web application server apparatus 14 to obtain a web page screen when the MFP 10 receives an instruction to obtain the web page screen. In Step S82, the web application server apparatus 14 provides, a web page screen, to which localization data is not yet reflected, external service data, default language data, and a script to the MFP 10. The web browser 12 obtains language data that is set to the MFP 10 by executing a script included in a request for language data.

In Step S83, the web browser 12 designates the language data and sends a request to obtain localization data to a URL of the external service providing system 16. It is to be noted that, only the authority to browse the settings of the external service providing system 16 is available to the public. That is, the public is unable to change the settings of the external service providing system 16.

In Step S84, the external service providing system 16 provides localization data corresponding to the language data designated in Step S83 to the MFP 10. In Step S84, when the MFP 10 cannot obtain localization data corresponding to the language data designated in Step S83, the MFP 10 obtains localization data of a default language (e.g., English) from the external service providing system 16.

In Step S85, the MFP 10 converts the obtained localization data into localization data having a format that can be reflected to a web page screen (i.e., format-converted localization data). In Step S86, the MFP 10 reflects the format-converted localization data to a web page screen.

Accordingly, the web browser 12 can display a web page screen to which localization data is reflected (language data reflected to web page screen) as illustrated in Fig. 13.

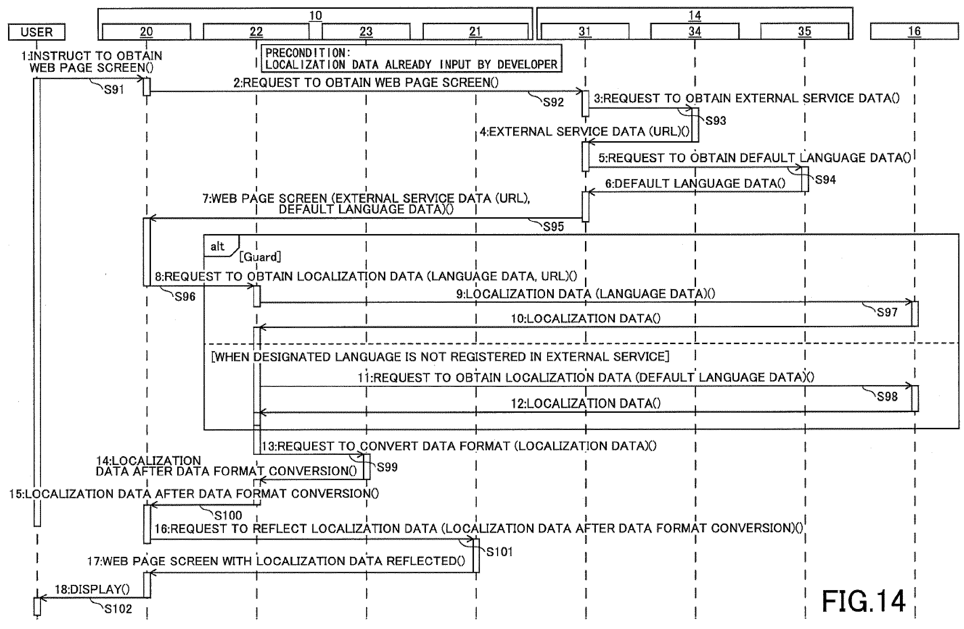

Fig. 14 is a sequence diagram of a process for reflecting localization data to a web page screen according to the third embodiment of the present invention. In the sequence diagram of Fig. 14, it is a precondition that localization data is already input by a developer.

In Step S91, the operation unit 20 of the MFP 10 receives a request to obtain a web page screen from the user. In Step S92, the operation unit 20 requests the web page management unit 31 of the web application server apparatus 14 to obtain a web page screen.

In Step S93, the web page management unit 31 requests the external service data management unit 34 to obtain external service data and obtains the external service data from the external service data management unit 31. The obtained external service data includes a URL of the external service providing system 16.

In Step S94, the web page management unit 31 requests the default language data management unit 35 to obtain default language data and obtains the default language data from the default language data management unit 35.

In Step S95, the web page management unit 31 provides, a web page screen, to which localization data is not yet reflected, external service data, default language data, and a script to the operation unit 20 of the MFP 10. The operation unit 20 obtains the language data that is set to the MFP 10 by executing the script provided from the web page management unit 31.

In Step S96, the operation unit 20 designates the obtained language data and a URL of the external service providing system 16 and requests the localization data obtaining unit 22 to obtain localization data. In Step S97, the localization data obtaining unit 22 designates the language data and transmits a request to obtain localization data to the URL of the external service providing system 16 and obtains the localization data corresponding to the designated language data.

It is to be noted that, in a case where the localization data of the designated language data is not registered in the external service providing system 16, the localization data obtaining unit 22 requests the external service providing system 16 to obtain default language data in Step S98. In Step S98, the localization data obtaining unit 22 designates default language data, transmits a request to obtain localization data to the URL of the external service providing system 16, and obtains localization data of the default language.

In Step S99, the localization data obtaining unit 22 requests the data format converting unit 23 to perform data conversion on the localization data obtained from the external service providing system 16. Then, the data format converting unit 23 converts the localization data provided from the external service providing system 16 into localization data having a data format that can be reflected to a web page screen.

Then, the data format converting unit 23 provides the localization data having a data format that can be reflected to a web page screen (format-converted localization data) to the localization data obtaining unit 22.

In Step S100, the localization data obtaining unit 22 provides the format-converted localization data to the operation unit 20. In Step S101, the operation unit 20 designates the format-converted localization data and requests the localization data reflecting unit 21 to reflect the designated format-converted localization data to a web page screen.

Then, the localization data reflecting unit 21 reflects the format-converted localization data to a web page screen and sends the web page screen to which the format-converted localization data is reflected to the operation unit 20. In Step S102, the operation unit 20 displays the web page screen to which the localization data is reflected.

In a case where localization data of the language data designated in Step S96 is cached in the localization data obtaining unit 22, the processes of Steps S97 and S98 may be omitted. In this case, the localization data obtaining unit 22 may use the cached localization data.

Further, in a case where the format-converted localization data is cached in the localization data obtaining unit 22, the processes of Steps S97 to S99 may be omitted. In this case, the localization data obtaining unit 22 may use the format-converted localization data.

Unlike the first embodiment in which the web application server 14 performs the processes of obtaining localization data, converting the data format of the localization data, and reflecting the format-converted localization data, the MFP 10 of the third embodiment can performs the processes of obtaining localization data, converting the data format of the localization data, and reflecting the format-converted localization data.

Because the obtaining of localization data is not performed through the web application server apparatus 14, the speed of displaying a web page screen can be improved. On the other hand, authentication data of an account of the administrator of the external service providing system 16 cannot be provided to the MFP 10. Therefore, only the authority to browse the authentication settings of the external service providing system 16 is available to the public. Thus, in a case where only the authority to browse the authentication settings of the external service providing system 16 is available to the public, an MFP 10 having no authentication data is able to obtain localization data.

In recent years, services provided over a network (e.g., the Internet) such as an online storage service is becoming widely used with an image forming apparatus that executes jobs. By using such services, the image forming apparatus that executes jobs can implement services such as a cloud scanning service or a cloud printing service.

For example, in order for an electronic device such as an image forming apparatus and a service to coordinate with each other via a network, there is a data process system in which an administrator sets a profile to the electronic device, so that the profile can be used to enable the electronic device to coordinate with the service (see, for example, Japanese Laid-Open Patent Publication No. 2014-32659).

In using an electronic device (e.g., image forming apparatus) that provides a service such as a cloud scanning service or a cloud printing service, the electronic device is to be set with information required for executing a job for providing the service (e.g., job settings, address settings).

Conventionally, in a case of setting information required for an electronic device to execute a job, a single language is often used to set the information to different user interfaces (UI) corresponding to each service. Therefore, in order for the user to set the information, the user is required to learn how to operate the different user interfaces corresponding to each service and set the information to the electronic device by using a single language.

In the following fourth to sixth embodiments of the present invention, a data process system that enables multiple languages to be used for setting information required for an electronic device to execute a job.

### [Fourth embodiment]

### <System configuration>

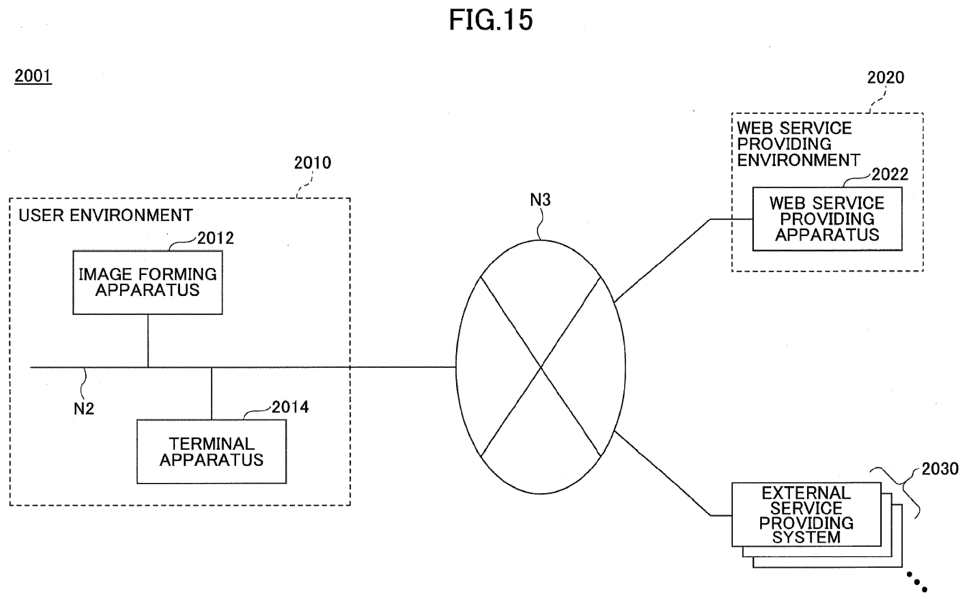

Fig. 15 is a schematic diagram illustrating a data process system 2001 according to the fourth embodiment of the present invention. The data process system 2001 includes a user environment 2010, a web service providing environment 2020, one or more external service providing systems 2030 that are connected to each other via a network (e.g., the Internet) N3.

The user environment 2010 is a system of an organization (e.g., user's company) that includes one or more image forming apparatuses 2012. The user environment 2010 has the image forming apparatus 2012 and a terminal apparatus 2014 connected to each other via a network (e.g., LAN (Local Area Network)). The image forming apparatus 2012 is one example of an electronic device. The image forming apparatus 2012 may be a multifunction peripheral, a scanner, a printer, a facsimile machine, a projector, or an electronic blackboard. Other than the image forming apparatus 2012, the electronic device of the fourth embodiment may also be various electronic devices that execute jobs according to job settings that are set to the electronic devices. For example, the image forming apparatus 2012 performs an image forming process such as scanning, printing (outputting), and facsimile communication.

The terminal apparatus 2014 is an apparatus that is operated by an administrator or a user of the image forming apparatus 2012 in the user environment 2010. The terminal apparatus 2014 may be, for example, a PC (Personal Computer), a tablet terminal, a smartphone, a mobile phone, or a PDA (Personal Digital Assistant).

The web service providing environment 2020 is a system of an organization (e.g., service company) that provides a web service such as a cloud scanning service or a cloud printing service via the network N3. The web service providing environment 2020 includes a web service providing apparatus 2022. Although the service that is provided in this embodiment is a web service, the service may be, for example, a service provided by an ASP (Application Server Provider) or a cloud service provided by way of the network N3.

The web service providing apparatus 2022 provides a web service such as a cloud scanning service or a cloud printing service via the network N3. For example, the cloud scanning service is a service that obtains image data scanned by the image forming apparatus 2012 of the user environment 2010 and stores the image data in a storage destination (storage area) that is prepared and provided by the external service providing system 2030 (e.g., online storage service). Further, the cloud printing service is a service that obtains print data stored in a storage destination that is prepared and provided by the external service providing system 2030 and printed by the image forming apparatus 2012 of the user environment 2010.

The external service providing system 2030 is a system that provides a service such as an online storage service via the network N3. In order to differentiate the service (e.g., cloud service) provided by the external service providing system 2030 with the web service provided by the web service providing apparatus 2022, the service provided by the external service providing system 2030 is hereinafter referred to as "external service".

The network N2 of the data process system 2001 illustrated in Fig. 15 may be a wireless communication network or a cable (wired) communication network. Fig. 15 merely illustrates an example of a system configuration of the data process system 2001. For example, the web service providing apparatus 2022 of the web service providing system 2020 may be divided into multiple computers that constitute the web service providing apparatus 2022.

### <Hardware configuration>

Each of the terminal apparatus 2014, the web service providing apparatus 2022, and the external service providing system 2030 may be implemented by the hardware configuration 500 illustrated in Fig. 2. The below-described processes of the terminal apparatus 2014, the web service providing apparatus 2022, and the external service providing system 2030 may be implemented by the hardware configuration of the computer 500 illustrated in Fig. 2. The below-described processes of the image forming apparatus 2012 of Fig. 15 may be implemented by the hardware configuration of the computer illustrated in Fig. 3.

### <Software configuration>

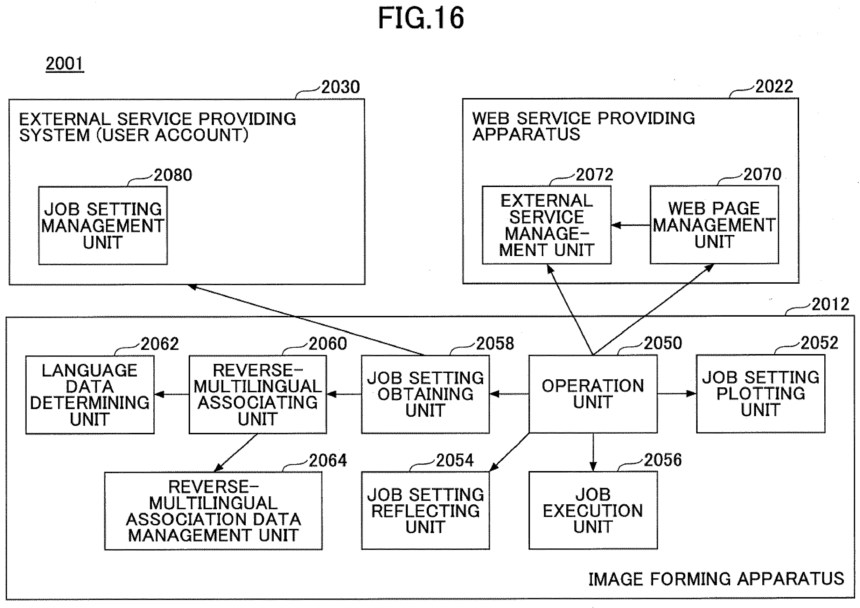

The image forming apparatus 2012, the web service providing system 2022, and the external service providing system 2030 of the fourth embodiment are implemented by the functional blocks illustrated in Fig. 16. Fig. 16 is a block diagram of the data process system 2001 according to the fourth embodiment of the present invention.

The image forming apparatus 2012 included in the data process system 2001 illustrated in Fig. 16 implements an operation unit 2050, a job setting plotting unit 2052, a job setting reflecting unit 2054, a job execution unit 2056, a job setting obtaining unit 2058, a reverse-multilingual associating unit 2060, a language data determining unit 2062, and a reverse-multilingual association data management unit 2064 by using the CPU 611 that executes a program recorded in a memory such as the ROM 613, the NVRAM 614, or the HDD 615.

Further, the web service providing apparatus 2022 included in the data process system 2001 illustrated in Fig. 16 implements a web page management unit 2070 and an external service management unit 2072 by using the CPU 506 that executes a program recorded in a memory such as the HDD 508 or the ROM 505. The external service providing system 2030 included in the data process system 2001 illustrated in Fig. 16 implements a job setting management unit 2080 by using the CPU 506 that executes a program recorded in a memory such as the HDD 508 or the ROM 505.

The operation unit 2050 of the image forming apparatus 2012 receives (accepts) various instructions from the user operating on the operation panel 602. For example, in a case where the operation unit 2050 receives a user's instruction to obtain job execution screen data from the web service providing apparatus 2022, the operation unit 2050 obtains the job execution screen from the web service providing apparatus 2022 and displays the job execution screen on the control panel 602. The job setting plotting unit 2052 performs plotting on the job execution screen based on the job settings, so that the user can select a job displayed in the job execution screen. The job setting reflecting unit 2054 reflects the job settings, so that the job settings serves as a parameter(s) for executing the job. The job execution unit 2056 executes a job based on the parameter to which the job settings are reflected. The job setting obtaining unit 2058 obtains job setting data from the job setting management unit 2080 of the external service providing system 2030.

The reverse-multilingual associating unit 2060 performs reverse-multilingual association (process of converting a language into a common language) on a language of the job setting data obtained from the external service providing system 2030. It is to be noted that the term "multilingualization" refers to a process of converting a single language into multiple languages whereas the term "reverse-multilingualization" refers to a process of converting multiple languages into a single common language. Thus, the term "multilingual" pertains to the process of "multilingualization" whereas the term "reverse-multilingual" pertains to the process of "reverse-multilingualization".

The language information determining unit 2062 determines the language data of the job setting data obtained from the external service providing system 2030. Note that the language information indicates what language the job setting data is defined in. The reverse-multilingual association data management unit 2064 manages reverse-multilingual association data in correspondence with each language. More specifically, the reverse-multilingual association data management unit 2064 manages reverse-multilingual association data including mapped data (association data) in which the language of the job setting data obtained from the external service providing system 2030 is associated with the below-described common language.

The web page management unit 2070 of the web service providing apparatus 2022 provides job execution screen data to the image forming apparatus 2012. The external service management unit 2072 manages the below-described external service data. The external service management unit 2072 provides the external service data to the web page management unit 2070 in accordance with a request for obtaining the external service data from the web page management unit 2070. The job setting management unit 2080 of the external service providing system 2030 provides job setting data associated with a user's account to the image forming apparatus 2012 in accordance with a request for obtaining the job setting data from the image forming apparatus 2012.

### <Details of processes>

Next, the processes of the data process system 2001 according to the fourth embodiment of the present invention are described in detail.

### <<Installing of web service>>

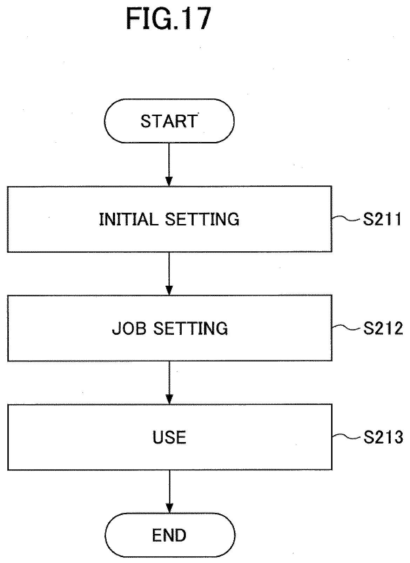

The installing of a web service is performed by using the procedures illustrated in Fig. 17. Fig. 17 is a flowchart illustrating the procedures of installing a web service according to an embodiment of the present invention. In Step S211, an administrator in the user environment 2010 uses the terminal apparatus 2014 to access the web service providing apparatus 2022 and perform an initial setting process. The initial setting process includes, for example, inputting the settings for using the external service providing system 2030 (e.g., registering the external service to be used).

After the initial setting process of Step S211, the administrator or the user uses the terminal apparatus 2014 to access the external service providing system 2030 and perform a job setting process in Step S212. The job setting process includes inputting the settings for enabling the image process apparatus 2012 to execute a job. In the fourth embodiment, the job setting process can be performed in multiple languages as described below. Further, in the fourth embodiment, a spreadsheet stored in, for example, the external service providing system may be used as a data source for performing the job setting process. After the job setting process of Step S212, the user is able to use a web service by using the image forming apparatus 2012.

In Step S213, the user uses the image forming apparatus 2012 to use a web service according to the job setting process of Step S212. For example, the image forming apparatus 2012 provides the web service to the user by obtaining job setting data from the external service providing system 2030, converting the language of the job setting data into a common language, and using the language-converted job setting data.

### <<Initial setting process and job setting process>>

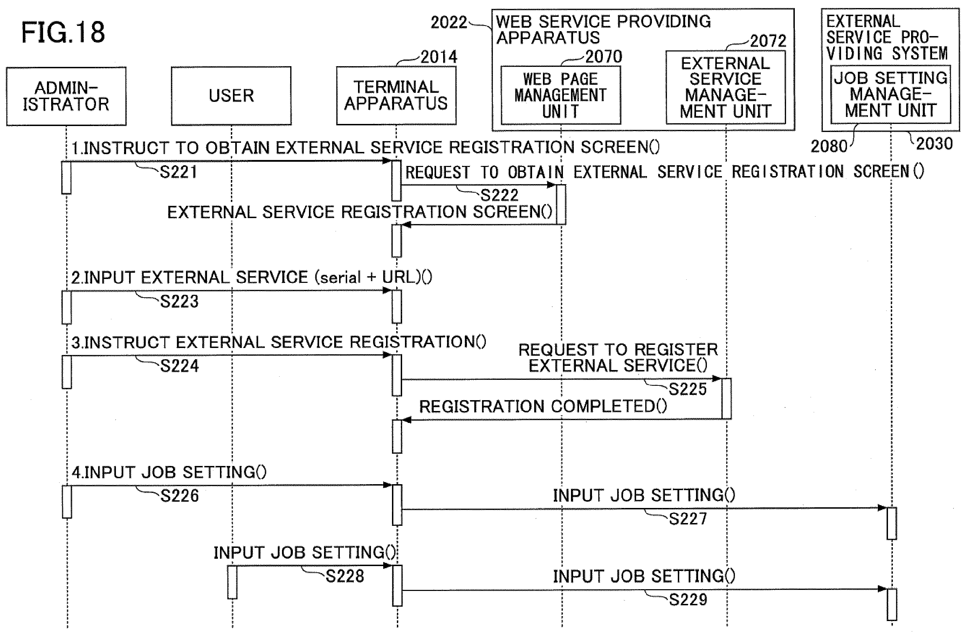

Fig. 18 is a sequence diagram illustrating the initial setting process and the job setting process according to an embodiment of the present invention. In Step S221, the administrator operates the terminal apparatus 2014 to instruct the terminal apparatus 2014 to obtain an external service registration screen for registering the external service to be used.

In Step S222, the terminal apparatus 2014 accesses the web service providing apparatus 2022 and requests the web service providing apparatus 2022 to obtain the external service registration screen. Thereby, the terminal apparatus 2014 obtains the web service registration screen from the web page management unit 2070 of the web service providing apparatus 2022. The terminal apparatus 2014 displays the external service registration screen on a browser or the like.

In Step S223, the administrator operates the terminal apparatus 2014 to input serial data and an external service URL on the external service registration screen displayed on the browser. In Step S224, the administrator operates the terminal apparatus 2014 to instruct registration of an external service.

In Step S225, the terminal apparatus 2014 accesses the web service providing apparatus 2022 and requests the web service providing apparatus 2022 to register the web service. The external service management unit 2072 of the web service providing apparatus 2022 associates the serial data with the external service URL (external service data) and registers the associated data. When the external service management unit 2072 completes the registration of the external service data, the external service management unit 2072 reports to the terminal apparatus 2014 that the registration of the external service data is completed.

In Steps S226 and S227, the administrator operates the terminal apparatus 2014 to accesses the external service providing system 2030 and input job setting data. For example, the administrator may input the job setting data to a spreadsheet managed by the external service providing system 2030.

Further, the job setting data may also be input by the user. Thus, in Steps S228 and S229, the user operates the terminal apparatus 2014 to access the external service providing system 2030 and input the job setting data. For example, the user may input the job setting data to a spreadsheet managed by the external service providing system 2030.

Accordingly, after registering the external service providing system 2030 to be used to the web service providing apparatus 2022, job setting data can be input to the spreadsheet managed by the external service providing system 2030 as illustrated in the sequence diagram of Fig. 18.

### <<Usage of web service>>

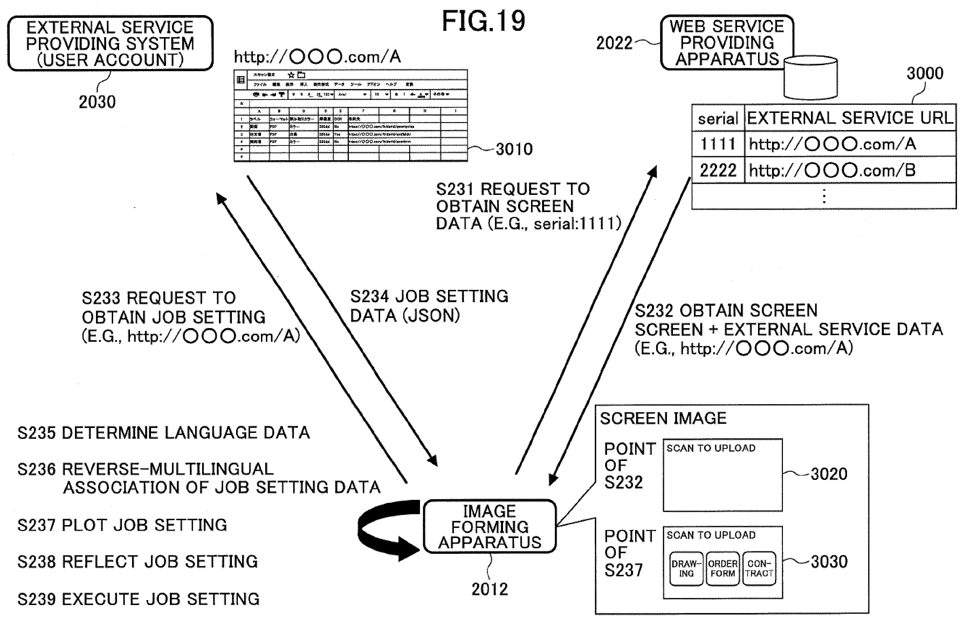

For example, the user may use a web service by way of the image forming apparatus 2012 as illustrated in Fig. 19.

Fig. 19 is a schematic diagram illustrating a process of using a web service according to the fourth embodiment of the present invention. First, the user operates the image forming apparatus 2012 to instruct the image forming apparatus 2012 to obtain a job execution screen.

In Step S231, the image forming apparatus 2012 designates serial data and requests the web service providing apparatus 2022 to obtain a job execution screen. The web service providing apparatus 2022 that receives the request from the image forming apparatus 2012 manages an external service data table 3000. Accordingly, the web service providing apparatus 2022 reads out an external service URL (external service data) corresponding to the serial data designated by the image forming apparatus 2012 from the external service data table 3000.

In Step S232, the image forming apparatus 2012 obtains job execution screen data and the external service data from the web service providing apparatus 2022. The image forming apparatus 2012 uses the external service data to request the external service providing system 2030 to obtain job setting data.

The external service providing system 2030 reads out the job setting data from a spreadsheet identified by the external service data and provides the job setting data to the image forming apparatus 2012. The external service providing system 2030 may be provide the job setting data in a data programming language format such as JSON (JavaScript (registered trademark) Object Notation).

In Step S235, the image forming apparatus 2012 determines language data (e.g., Japanese) of the job setting data obtained from the external service providing system 2030. As described above, the language data indicates the language in which the job setting data is defined.

In Step S236, the image forming apparatus 2012 performs a reverse-multilingual associating process on the job setting data obtained from the external service providing system 2030. The reverse-multilingual associating process is a process that converts the language of the job setting data into a common language. The term "common language" is a common language that is used for reflecting the job setting data to the parameters for executing a job. In Step S237, the image forming apparatus 2012 plots a job execution screen (e.g., buttons for enabling the user to select a job(s)) based on the language-converted job setting data (i.e., job setting data after being subjected to the reverse-multilingual associating process).

It is possible for the image forming apparatus 2012 to display a job execution screen 3020 at the timing of obtaining the job execution screen data in Step S232. However, as illustrated in Fig. 19, the job execution screen 3020 does not display, for example, the buttons for enabling the user to select a job because the external service providing system 2030 has not yet provided the job setting data.

However, once the reverse-multilingual associating process is completed in Step S236, the image forming apparatus 2012 can display a job execution screen 3030 as illustrated in Fig. 19. Because the reverse-multilingual associating process is completed, the job execution screen 3030 displays, for example, the buttons for enabling the user to select a job.

Accordingly, when the user selects a job displayed on the job execution screen 3030, the image forming apparatus 2012 reflects the language-converted job setting data to the parameters for executing the job in Step S238. In Step S239, the image forming apparatus 2012 executes the selected job based on the parameters to which the language-converted job setting data is reflected.

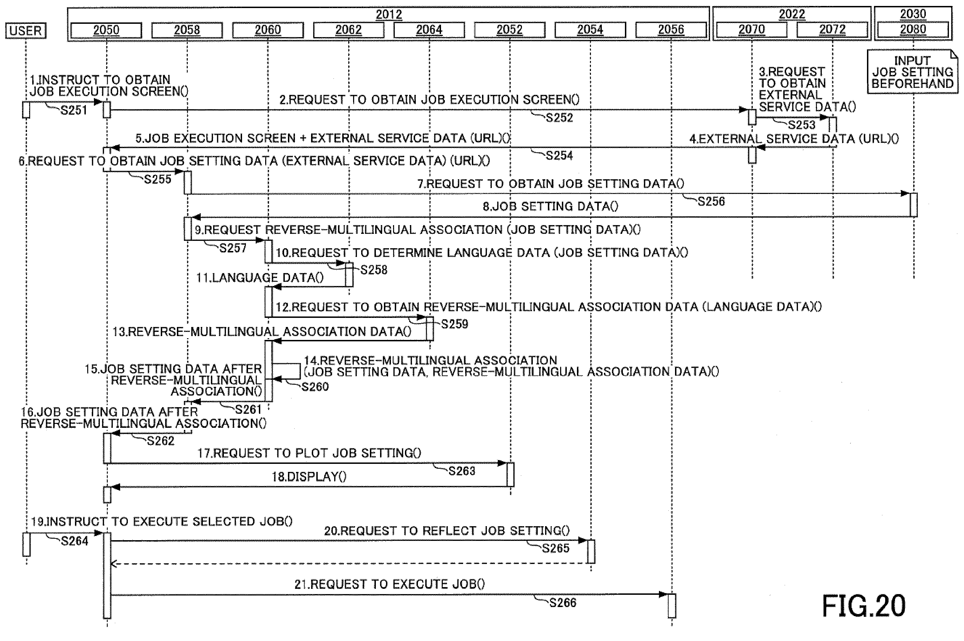

Fig. 20 is a sequence diagram illustrating a process of using a web service according to the fourth embodiment of the present invention. In Step S251, the operation unit 2050 of the image forming apparatus 2012 receives (accepts) a user's instruction to obtain a job execution screen. In Step S252, the operation unit 2050 designates serial data and requests the web service providing apparatus 2022 to obtain the job execution screen.

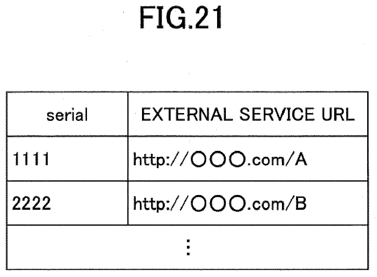

The web page management unit 2070 of the web service providing apparatus 2022 designates the serial data designated by the image forming apparatus 2012 and requests the external service management unit 2072 to obtain external service data corresponding to the serial data. The external service management unit 2072 manages the external service data as illustrated in Fig. 21.

Fig. 21 is a table illustrating a configuration of the external service data (external service data table) according to an embodiment of the present invention. The external service management unit 2072 registers serial data in association with an external service URL (external service data) in the external service data table illustrated in Fig. 21. Although the external service data table of Fig. 21 illustrates serial data being registered in association with an external service URL, the service management unit 2072 may register data associated with an authenticated user in association with an external service URL in the external service data table.

The external service management unit 2072 reads out the external service URL corresponding to the serial data designated by the image forming apparatus 2012 from the external service data table of Fig. 21 and provides the external service URL to the web page management unit 2070. In Step S254, the web page management unit 2070 provides the job execution screen data and the external service URL to the image forming apparatus 2012.

In Step S255, the operation unit 2050 of the image forming apparatus 2012 designates the external service URL obtained from the web service providing apparatus 2022 and requests the job setting obtaining unit 2058 to obtain the job setting data. In Step S256, the job setting obtaining unit 2058 designates the external service URL and requests the external service providing system 2030 to obtain the job setting data.

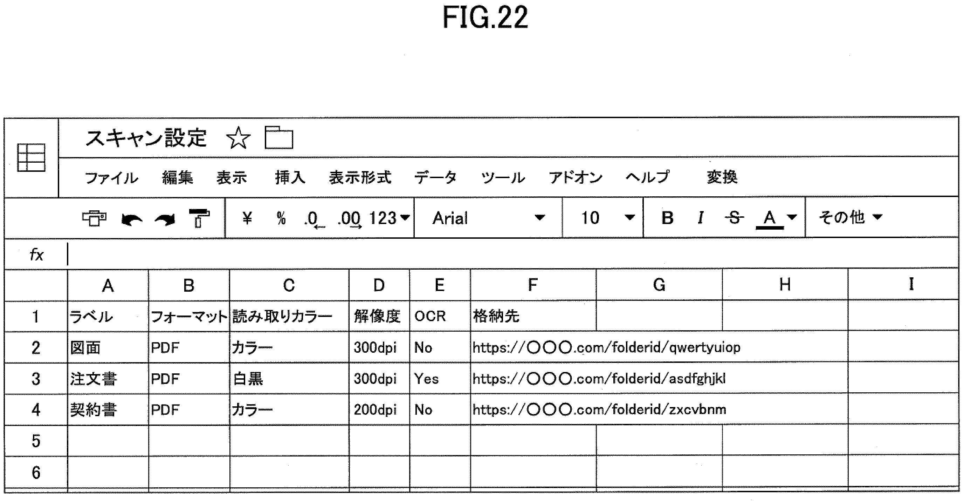

The job setting management unit 2080 of the external service providing system 2030 reads out job setting data from a spreadsheet (see, for example, Fig. 22) identified by the external service URL. Fig. 22 is a schematic diagram illustrating an example of a spreadsheet in which job setting data is registered. The spreadsheet of Fig. 22 is an example of a spreadsheet in which job setting data defined in Japanese is registered.

The spreadsheet of Fig. 22 illustrates job setting data of a scan to upload service (cloud scanning service) in which scanned image data is stored ins a predetermined storage destination. The spreadsheet of Fig. 22 indicates various items for setting the job setting data such as an item "label", an item "format", an item "reading color", an item "resolution", an item "OCR (Optical Character Recognition)", and an item "storage destination".

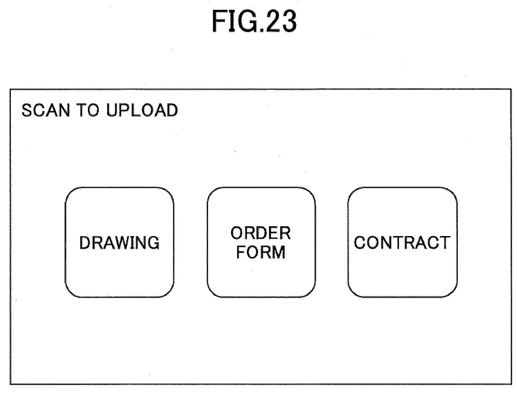

The item "label" indicates data to be displayed on a button of the job execution screen. For example, in a case where the job setting data is the data indicated in the spreadsheet of Fig. 22, the job setting plotting unit 2052 plots the buttons of Fig. 23 on the job execution screen. Fig. 23 is a schematic diagram illustrating an example of the buttons for enabling the user to select a job.

Returning to Fig. 22, the items "format", "reading color", and "resolution" are examples of the settings required for enabling the image forming apparatus 2012 to execute a scanning process. The item "OCR" is a setting for performing an OCR process. The item "storage destination" is a setting indicating a destination (area) for storing image data that is read from a document (manuscript).

Returning to Fig. 22, the job setting management unit 2080 of the external service providing system 2030 provides the job setting data, that is read out from the spreadsheet (see, for example, Fig. 22) identified by the external service URL, to the image forming apparatus 2012. As described above, the job setting data may be provided in the JSON format.

In Step S257, the job setting obtaining unit 2058 of the image forming apparatus 2012 requests the reverse-multilingual associating unit 2060 to perform the reverse-multilingual associating process on the job setting data provided by the external service providing system 2030.

In Step S258, the reverse-multilingual associating unit 2060 requests the language data determining unit 2062 to determine the language of the job setting data provided from the external service providing system 2030. The language data determining unit 2062 determines the language of the job setting data by referring to, for example, the header of the job setting data or a predetermined part of the job setting data. Then, the language data determining unit 2062 sends the determined language of the job setting data (language data) to the reverse-multilingual associating unit 2060.

In Step S259, the reverse-multilingual associating unit 2060 requests the reverse-multilingual association data management unit 2064 to obtain the reverse-multilingual association data corresponding to the language data sent from the language data determining unit 2062.

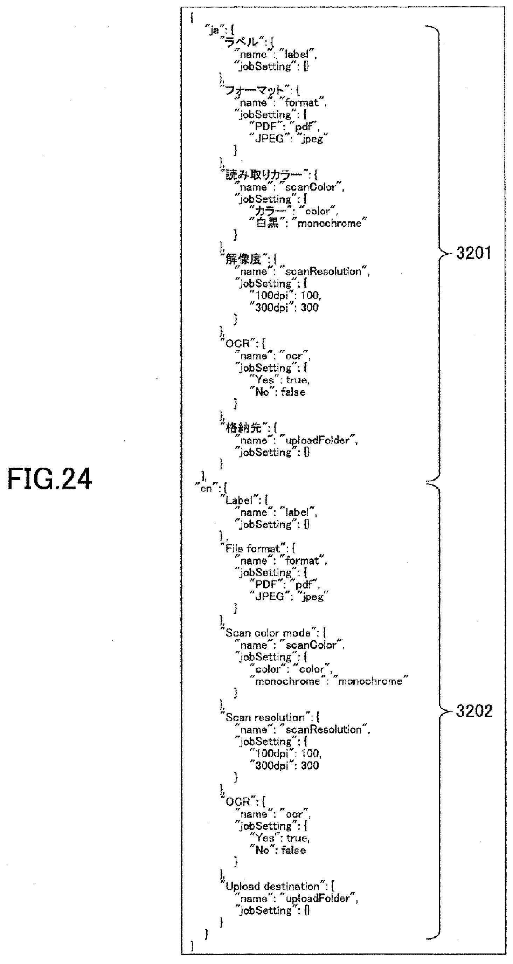

Fig. 24 is a schematic diagram illustrating a configuration of the reverse-multilingual association data according to an embodiment of the present invention. The reverse-multilingual association data illustrated in Fig. 24 includes reverse-multilingual association data 3201 corresponding to the language data "Japanese" and reverse-multilingual association data 3202 corresponding to the language data "English". The reverse-multilingual association data management unit 2064 manages the mapping of data, more specifically, the mapping between the setting items/setting values of each language data of the job setting data obtained from the external service providing system 2030 and the setting items/setting values of the common language.

In the reverse-multilingual association data 3201 of Fig. 24, the setting item " 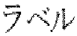 " (the term "label" represented in Japanese Katakana characters) and the setting item " 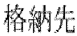 " (the term "storage destination" represented in Japanese Kanji characters) of the language data "Japanese" are mapped with the setting item "label" and the setting item "upload folder" of the common language.

Note that the items "Jobsetting", that serve to manage the mapping between the setting item " 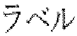 " and the setting item " 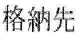 " of the language data "Japanese" and the setting item "label" and the setting item upload folder" of the common language, are blank (see Fig. 24). A setting item having a blank Jobsetting indicates that the reverse-multilingual associating process is not to be performed on the item value obtained from the external service providing system 2030.

In the reverse-multilingual association data 3201 of Fig. 24, the setting item " 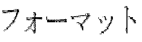 " (the term "format" represented in Japanese Katakana characters), the setting item " 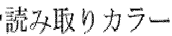 " (the term "reading color" represented in Japanese Kanji and Katakana characters), the setting item " 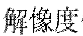 " (the term "resolution" represented in Japanese Kanji characters), and the setting item "OCR" of the language data "Japanese" are mapped with the setting item "format", the setting item "scan Color", the setting item "scan Resolution", and the setting item "ocr" of the common language. Further, the setting item " 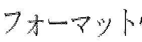 ", the setting item " 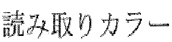 ", the setting item " 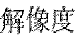 ", and the setting item "OCR" of the language data "Japanese" are mapped with the setting item "format", the setting item "scan Color", the setting item "scan Resolution", and the setting item "ocr" of the common language by way of the setting item "jobSetting".

For example, the setting value "PDF" and the setting value "JPEG" of the setting item " 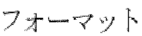 " of the language data "Japanese" are mapped with the setting value "pdf" and the setting value "jpeg" of the common language. Further, the setting value " 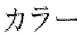 " (the term "color" represented in Japanese Katakana characters) and the setting value " 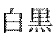 " (the term "monochrome" represented in Japanese Kanji characters) of the language data "Japanese" are mapped with the setting value "color" and the setting value "monochrome" of the common language.

Returning to Fig. 20, the reverse-multilingual association data management unit 2064 sends the reverse-multilingual association data, corresponding to the language data designated by the reverse-multilingual associating unit 2060, to the reverse-multilingual associating unit 2060. In Step S260, the reverse-multilingual associating unit 2060 performs the reverse-multilingual associating process by using the reverse-multilingual association data, so that the setting items and setting values in the job setting data obtained from the external service providing system 2030 are converted into corresponding setting items and setting values of the common language.

In Step S261, the reverse-multilingual associating unit 2060 sends the language-converted job setting data (i.e., job setting data after being subjected to the reverse-multilingual associating process) to the job setting obtaining unit 2058. Further, in Step S262, the job setting obtaining unit 2058 sends the language-converted job setting data to the operation unit 2050.

In Step S263, the operation unit 2050 requests the job setting plotting unit 2052 to plot a job execution screen based on the language-converted job setting data. The job setting plotting unit 2052 plots the job execution screen (see, for example, Fig. 23) including the buttons that enable the user to select a job based on the language-converted job setting data.

In Step S264, the user selects (e.g., presses) a button corresponding to a job that is desired to be executed from the buttons displayed on the job execution screen illustrated in Fig. 23. When the job is selected by the user, the operation unit 2050 of the image forming apparatus 2012 requests the job setting reflecting unit 2054 to reflect the job setting data to the parameters of the job selected by the user.

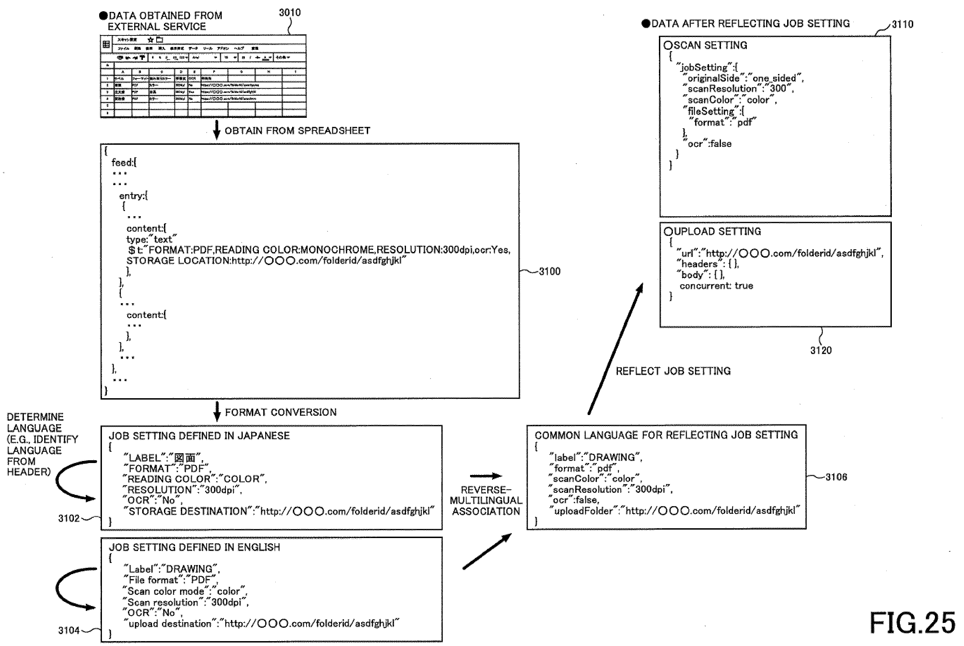

The job setting reflecting unit 2054 reflects the job setting data to the parameters of the job selected to be executed according to the procedures illustrated in Fig. 25. Fig. 25 is a schematic diagram illustrating a process of reflecting job setting data to parameters of a job according to an embodiment of the present invention.

The job setting management unit 2080 of the external service providing system 2030 reads out job setting data from, for example, a spreadsheet 3010. Among the job setting data read out from the spreadsheet 3010, job setting data 3100 including a setting item "label" with a setting value "drawing" of the language "Japanese" are illustrated in Fig. 25.

Then, the job setting management unit 2080 provides the job setting data 3100 read out from the spreadsheet 3010 to the image forming apparatus 2012. For example, the job setting management unit 2080 may provide the job setting data 3100 in a JSON format. The image forming apparatus 2012 determines the language data of the job setting data 3100 provided from the external service providing system 2030 and performs the reverse-multilingual associating process on the setting items and the setting values of the job setting data 3100. In this example, the setting items and the setting values of the job setting data 3100 are converted into corresponding setting items and setting values of the common language.

More specifically, in this example, the job setting data 3102 of Fig. 25 indicates that the job setting data is defined in "Japanese" (i.e., language data set to "Japanese"). Further, the job setting data 3104 of Fig. 25 indicates that the job setting data is defined in "English" (i.e., language data set to "English"). Accordingly, the image forming apparatus 2012 converts the setting items and the setting values of the job setting data 3102, 3104 defined in each language into the setting items and the setting values of the job setting data 3106 by using the reverse-multilingual association data as illustrated in Fig. 25.

Then, the job setting reflecting unit 2054 of the image forming apparatus 2012 reflects the language-converted job setting data 3106 to the parameters of the job to be executed. In the example of Fig. 25, the job corresponding to the label "drawing" is selected as the job to be executed. The job setting reflecting unit 2054 reflects the job setting data of the label "drawing" to the parameter of the scan setting data 3110 and the parameter of the upload setting data 3120.

Returning to Fig. 20, the operation unit 2050 of the image forming apparatus 2012 requests the job execution unit 2056 to execute the selected job in Step S266. The job execution unit 2056 executes the selected job based on the parameter of the scan setting data 3110 and the parameter of the upload setting data 3120 to which the job setting data is reflected, respectively (see Fig. 25).

Hence, with the fourth embodiment of the present invention, job setting data can be registered to the external service providing system 2030 (being used regularly by the user) in multiple languages. Accordingly, the user can perform job setting on an user interface (UI) of the external service providing system 2030 (being used regularly by the user) in multiple languages.

Further, by performing the job setting process on the external service providing system 2030, the job execution screen 2012 of the image forming apparatus 2012 can easily display the buttons for executing a predetermined job in multiple languages to the user or the administrator.

Further, with the fourth embodiment, the content of the job executed by the image forming apparatus 2012 can controlled in multiple languages based on the job setting data registered in the external service providing system 2030 that is regularly used by the user.

### [Fifth embodiment]

In the fourth embodiment, the image forming apparatus 2012 includes the reverse-multilingual association data. In the below-described fifth embodiment, the web service providing apparatus 2022 includes the reverse-multilingual association data. In the fifth embodiment, like components and parts are denoted with like reference numerals as the reference numerals of the fourth embodiment and are not further explained.

### <Software configuration>

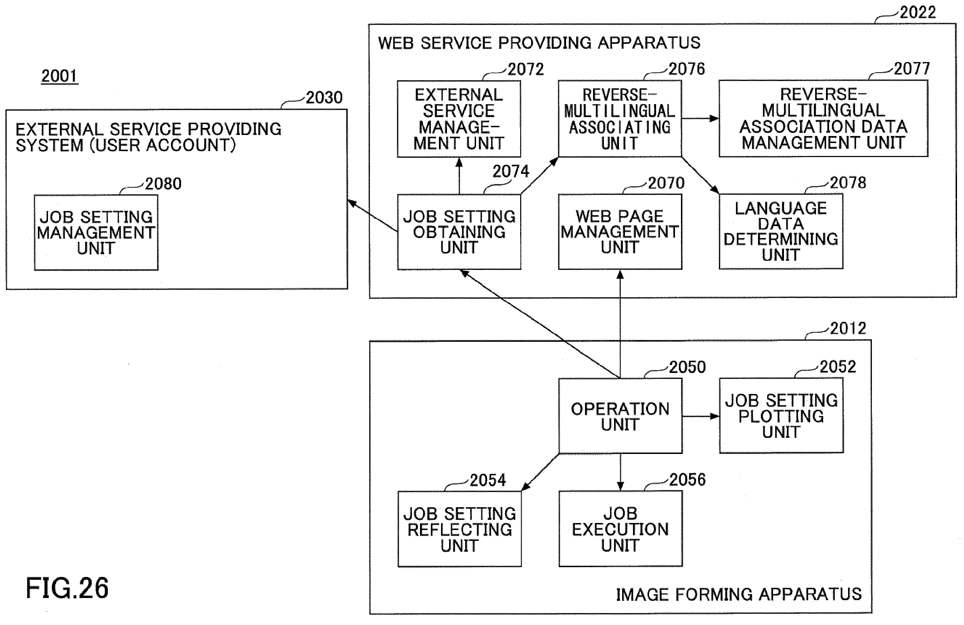

The image forming apparatus 2012, the web service providing apparatus 2022, and the external service providing system 2030 according to the fifth embodiment of the present invention are implemented by the functional blocks illustrated in Fig. 26. Fig. 26 is a block diagram of the data process system 2001 according to the fifth embodiment of the present invention.

Unlike the software configuration illustrated in Fig. 16, the image forming apparatus 2012 does not include the job setting obtaining unit 2058, the reverse-multilingual associating unit 2060, the language data determining unit 2062, and the reverse-multilingual association data management unit 2064. Further, a job setting obtaining unit 2074, a reverse-multilingual associating unit 2076, a reverse-multilingual association data management unit 2077, and a language data determining unit 2078 are added to the web service providing unit 2022 as illustrated in the block diagram of Fig. 26. Thus, the differences between the block diagram of Fig. 16 and the block diagram of Fig. 26 are described below.

The operation unit 2050 of the image forming apparatus 2012 obtains the language-converted job setting data from the job setting obtaining unit 2074 of the web service providing apparatus 2022. The external service management unit 2072 of the web service providing apparatus 2022 provides the external service data to the job setting obtaining unit 2074.

The job setting obtaining unit 2074 obtains the job setting data from the job setting management unit 2080 of the external service providing system 2030. The reverse-multilingual associating unit 2076 performs the reverse-multilingual associating process in which the language of the job setting data is converted into the common language. The reverse-multilingual association data management unit 2077 manages the reverse-multilingual association data. Further, the language data determining unit 2078 determines the language data of the job setting data.

Accordingly, in the fifth embodiment of the present invention, the web service providing apparatus 2022 performs the reverse-multilingual associating process, and provides the language-converted job setting data to the image forming apparatus 2012.

### <Details of processes>

Next, the differences between the processes of the data process system 2001 of the fifth embodiment and the processes of the data process system 2001 of the fourth embodiment are described in detail.

### <<Installing of web service>>

In the fifth embodiment, the process of Step S213 illustrated in Fig. 17 differs from the fourth embodiment. In the fifth embodiment, the image forming apparatus 2012 obtains the job setting data from the external service providing system 2030 via the web service providing apparatus 2022 and provides the web service by using the obtained job setting data.

### «Usage of web service>>

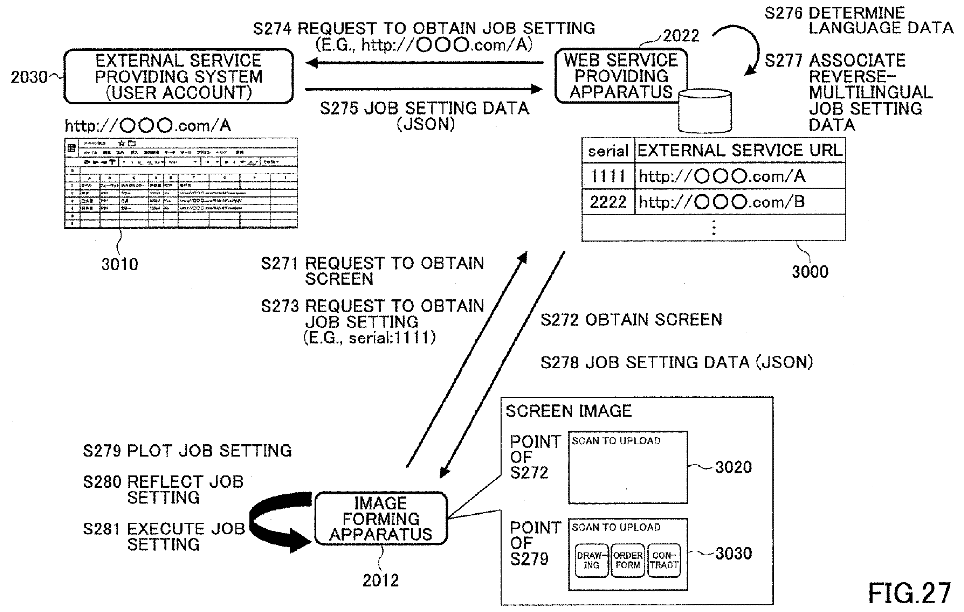

In the fifth embodiment, for example, the user may use a web service by way of the image forming apparatus 2012 as illustrated in Fig. 27. Fig. 27 is a schematic diagram illustrating a process of using a web service according to the fifth embodiment of the present invention. First, the user operates the image forming apparatus 2012 to instruct the image forming apparatus 2012 to obtain a job execution screen.

In Step S271, the image forming apparatus 2012 requests the web service providing apparatus 2022 to obtain a job execution screen. In Step S272, the image forming apparatus 2012 obtains job execution screen data from the web service providing apparatus 2022.

In Step S273, the image forming apparatus 2012 designates serial data and requests the web service providing apparatus 2022 to obtain the job setting data. The web service providing apparatus 2022 manages the external service data table. The web service providing apparatus 2022 reads out the external service URL (external service data) corresponding to the serial data designated by the image forming apparatus 2012 from the external service data table 3000.

In Step S274, the web service providing apparatus 2022 uses the external service data to request the external service providing system 2030 to obtain job setting data. In Step S275, the external service providing system 2030 reads out the job setting data from a spreadsheet 3010 identified by the external service data and provides the job setting data to the web service providing apparatus 2022. The external service providing system 2030 may be provide the job setting data in a data programming language format such as JSON (JavaScript (registered trademark) Object Notation).

In Step S276, the web service providing apparatus 2022 determines language data (e.g., Japanese) of the job setting data obtained from the external service providing system 2030. In Step S277, the web service providing apparatus 2022 performs a reverse-multilingual associating process on the job setting data obtained from the external service providing system 2030. The reverse-multilingual associating process is a process that converts the language of the job setting data into a common language. In Step S278, the web service providing apparatus 2022 provides the language-converted job setting data to the image forming apparatus 2012 in the JSON format.

In Step S279, the image forming apparatus 2012 plots a job execution screen (e.g., buttons for enabling the user to select a job(s)) based on the language-converted job setting data (i.e., job setting data after being subjected to the reverse-multilingual associating process) provided from the web service providing apparatus 2022.

Accordingly, when the user selects a job displayed on the job execution screen 3030, the image forming apparatus 2012 reflects the language-converted job setting data to the parameters for executing the job in Step S280. In Step S281, the image forming apparatus 2012 executes the selected job based on the parameters to which the language-converted job setting data is reflected.

Hence, with the fifth embodiment of the present invention, the web service providing apparatus 2022 can perform the reverse-multilingual associating process and provide the language-converted job setting data to the image forming apparatus 2012.

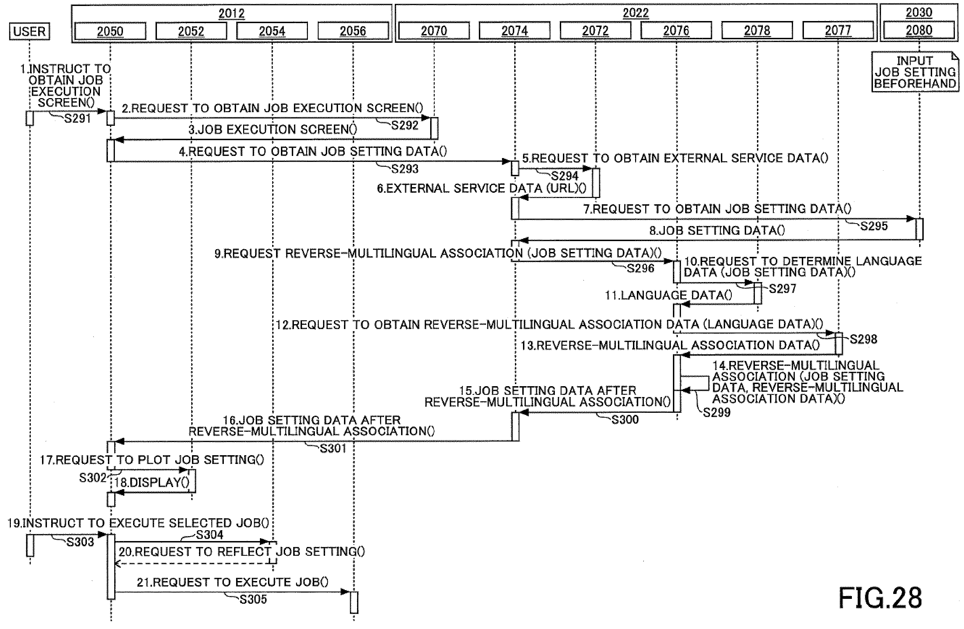

Fig. 28 is a sequence diagram illustrating a process of using a web service according to the fifth embodiment of the present invention. In Step S291, the operation unit 2050 of the image forming apparatus 2012 receives (accepts) a user's instruction to obtain a job execution screen. In Step S292, the operation unit 2050 requests the web service providing apparatus 2022 to obtain the job execution screen. The web page management unit 2070 provides the job execution screen to the image forming apparatus 2012.

In Step S293, the operation unit 2050 of the image forming apparatus designates serial data and requests the job setting obtaining unit 2074 of the web service providing apparatus 2022 to obtain the job setting data.

The external service management unit 2072 reads out the external service URL corresponding to the serial data designated by the image forming apparatus 2012 from the external service data table and provides the external service URL to the job setting obtaining unit 2074.

In Step 295, the job setting obtaining unit 2074 designates the external service URL and requests the external service providing system 2030 to obtain the job setting data.

The job setting management unit 2080 of the external service providing system 2030 reads out job setting data from a spreadsheet (see, for example, Fig. 22) identified by the external service URL. The job setting management unit 2080 of the external service providing system 2030 provides the job setting data to job setting data obtaining unit 2074 of the web service providing apparatus 2022. The external service providing system 2030 may be provide the job setting data in a JSON format. In Step S296, the job setting obtaining unit 2074 requests the reverse-multilingual associating unit 2076 to perform the reverse-multilingual associating process on the job setting data provided by the external service providing system 2030.

In Step S297, the reverse-multilingual associating unit 2076 requests the language data determining unit 2078 to determine the language of the job setting data provided from the external service providing system 2030. The language data determining unit 2078 determines the language of the job setting data and sends the determined language of the job setting data to the reverse-multilingual associating unit 2076.

In Step S298, the reverse-multilingual associating unit 2076 requests the reverse-multilingual association data management unit 2077 to obtain the reverse-multilingual association data corresponding to the language data sent from the language data determining unit 2078.

After the reverse-multilingual associating unit 2076 performs the reverse-multilingual associating process, the reverse-multilingual associating unit 2076 sends the language-converted job setting data to the job setting obtaining unit 2074 in Step S301. Further, in Step S301, the job setting obtaining unit 2074 of the web service providing unit 2022 sends the language-converted job setting data to the operation unit 2050 of the image forming apparatus 2012.

In Step S302, the operation unit 2050 requests the job setting plotting unit 2052 to plot a job execution screen based on the language-converted job setting data. The job setting plotting unit 2052 plots the job execution screen (see, for example, Fig. 23) including the buttons for enabling the user to select a job based on the language-converted job setting data.

In Step S303, the user selects (e.g., presses) a button corresponding to a job that is desired to be executed from the buttons displayed on the job execution screen illustrated in Fig. 23. When the job is selected by the user, the operation unit 2050 of the image forming apparatus 2012 requests the job setting reflecting unit 2054 to reflect the job setting data to the parameters of the job selected by the user in Step S304. In Step S305, the operation unit 2050 requests the job execution unit 2056 to execute the selected job. The job execution unit 2056 executes the selected job based on the parameter of the scan setting data 3110 and the parameter of the upload setting data 3120 to which the job setting data is reflected, respectively (see Fig. 25).

Hence, the fifth embodiment of the present invention can attain the same advantages as the fourth embodiment even in a case where the web service providing apparatus 2022 performs the reverse-multilingual associating process and provides the language-converted job setting data to the image forming apparatus 2012.

### [Sixth embodiment]

In the below-described sixth embodiment, the external service providing system 2030A includes the reverse-multilingual association data. In the sixth embodiment, like components and parts are denoted with like reference numerals as the reference numerals of the fourth and fifth embodiments and are not further explained.

### <Software configuration>

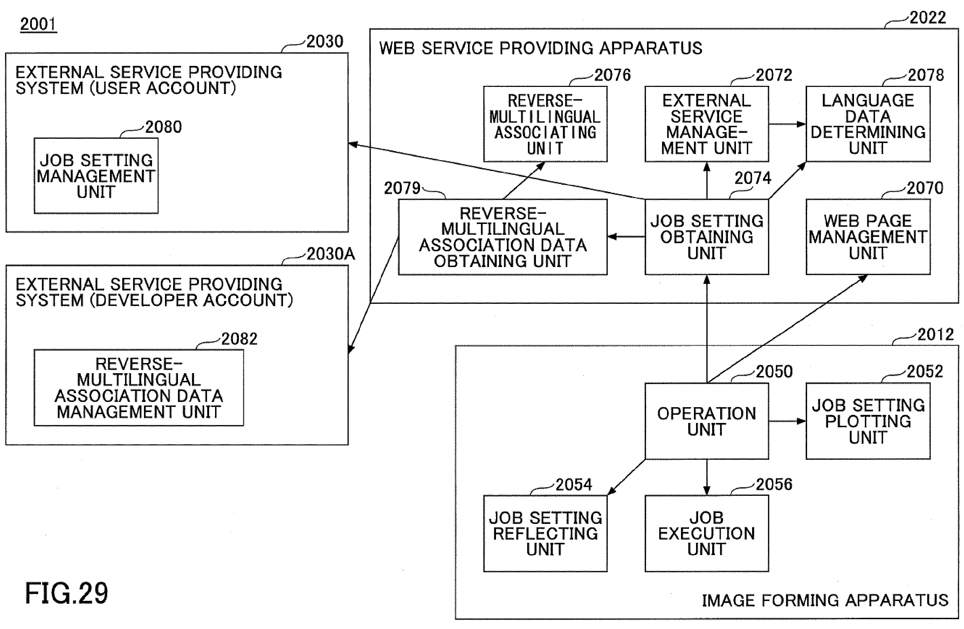

The image forming apparatus 2012, the web service providing apparatus 2022, and the external service providing system 2030A according to the sixth embodiment of the present invention are implemented by the functional blocks illustrated in Fig. 29. Fig. 29 is a block diagram of the data process system 2001 according to the sixth embodiment of the present invention.

Unlike the software configuration illustrated in Fig. 26, the reverse-multilingual association data management unit 2077 of the web service providing apparatus 2022 is replaced by the reverse-multilingual association data obtaining unit 2079. Further, a reverse-multilingual association data management unit 2082 is added to the external service providing system 2030A as illustrated in the block diagram of Fig. 29. The reverse-multilingual association data management unit 2082 manages reverse-multilingual association data associated with an administrator's account. Thus, the differences between the block diagram of Fig. 26 and the block diagram of Fig. 29 are described below.

The reverse-multilingual association data obtaining unit 2079 of the web service providing apparatus 2022 designates language data and obtains the reverse-multilingual association data from the external service providing system 2030A. As described above, the reverse-multilingual association data management unit 2082 of the external service providing system 2030A manages reverse-multilingual association data associated with an administrator's account.

Accordingly, in the sixth embodiment, the web service providing apparatus 2022 obtains reverse-multilingual association data from the external service providing system 2030A, performs the reverse-multilingual associating process on the obtained reverse-multilingual association data, and provides the language-converted job setting data to the image forming apparatus 2012.

### <Details of processes>

Next, the differences between the processes of the data process system 2001 of the sixth embodiment and the processes of the data process system 2001 of the fifth embodiment are described in detail.

### <<Installing of web service>>

In the fifth embodiment, the external service data of the user's account and the external service data of the administrator's account are registered in Step S211 of Fig. 17. Further, the administrator's terminal apparatus 2014 accesses the external service providing system 2030A and registers the reverse-multilingual association data in the reverse-multilingual association data management unit 2082.

After the initial setting process of Step S211, the administrator or the user uses the terminal apparatus 2014 to access the external service providing system 2030 and perform a job setting process in Step S212. Then, proceeding to Step S213, the user uses the web service by using the image forming apparatus 2012 according the job setting process performed in Step S212. For example, the web service providing apparatus 2022 obtains the reverse-multilingual association data from the external service providing system 2030A registered in the initial setting process and performs the reverse-multilingual associating process by using the obtained reverse-multilingual association data.

### <<Usage of web service>>

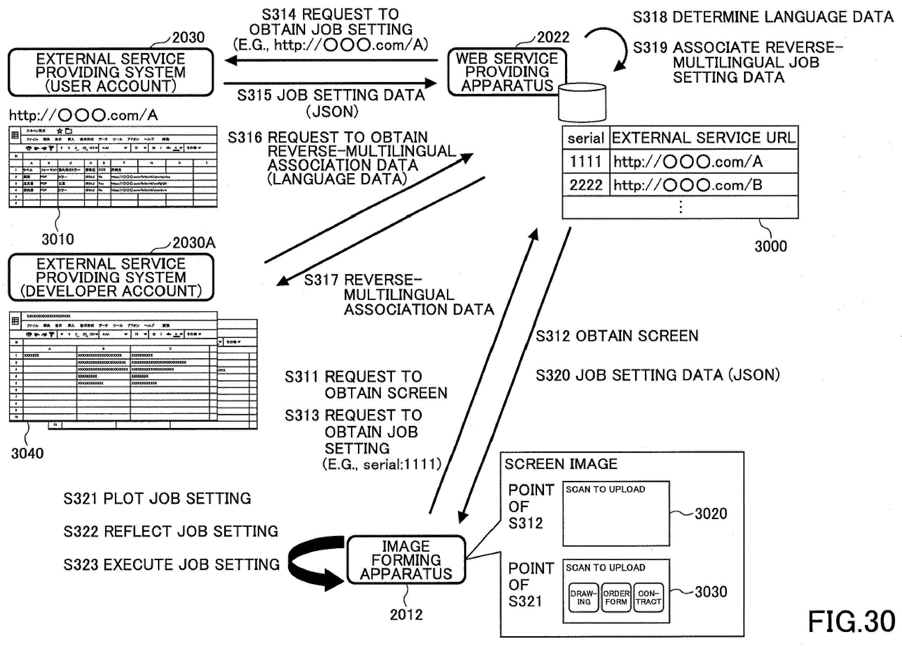

In the sixth embodiment, for example, the user may use a web service by way of the image forming apparatus 2012 as illustrated in Fig. 30. Fig. 30 is a schematic diagram illustrating a process of using a web service according to the sixth embodiment of the present invention.

Because the processes of Steps S311 to S315 are the same as the processes of Steps S271 to S275 of Fig. 27, further explanation of the processes performed in Steps S311 to S315 is omitted. In Step S316, the reverse-multilingual association data obtaining unit 2079 of the web service providing apparatus 2022 designates language data and requests for the reverse-multilingual association data corresponding to the designated language data to the external service providing system 2030A. In Step S317, the external service providing system 2030A sends the reverse-multilingual association data corresponding to the designated language data to the web service providing apparatus 2022. Because the processes of Steps S318 and after are the same as the processes of Steps S276 and after of Fig. 27, further explanation of the processes performed in Steps S318 and after is omitted.

Hence, with the sixth embodiment, the web service providing apparatus 2022 can perform the reverse-multilingual associating process by using the reverse-multilingual association data obtained from the external service providing system 2030A and provide the language-converted job setting data to the image forming apparatus 2012.

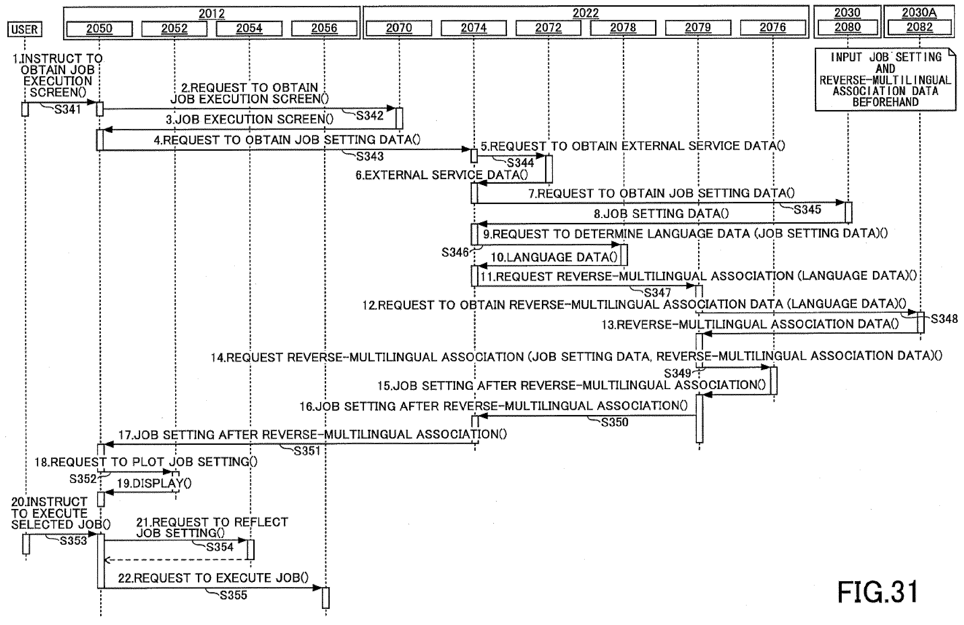

Fig. 31 is a sequence diagram illustrating a process of using a web service according to the sixth embodiment of the present invention. Because the processes of Steps S341 to S345 are the same as the processes of Steps S291 to S295 of Fig. 28, further explanation of the processes performed in Steps S341 to S345 is omitted.

In Fig. 346, the job setting obtaining unit 2074 requests the language data determining unit 2078 to determine the language data of the job setting data obtained from the external service providing system 2030. The language data determining unit 2078 determines the language data of the job setting data provided from the external service providing system 2030 and sends the determined language of the job setting data to the job setting obtaining unit 2074.

In Step S347, the job setting obtaining unit 2074 requests the reverse-multilingual association data obtaining unit 2079 to perform the reverse-multilingual associating process on the job setting data provided from the external service providing system 2030. In Step S348, the reverse-multilingual association data obtaining unit 2079 designates the language data and obtains the reverse-multilingual association data corresponding to the designated language data from the external service providing system 2030A.

In Step S349, the reverse-multilingual association data obtaining unit 2079 requests the reverse-multilingual associating unit 2076 to perform the reverse-multilingual associating process by using the obtained reverse-multilingual association data. The reverse-multilingual associating unit 2076 uses the reverse-multilingual association data to perform the reverse-multilingual associating process. In the reverse-multilingual associating process, the setting items and the setting values of the job setting data obtained from the external service providing system 2030 are converted into corresponding setting items and corresponding setting values of the common language.

In Step S350, the reverse-multilingual association data obtaining unit 2079 sends the language-converted job setting data to the job setting obtaining unit 2074. Because the processes of Steps S351 and after are the same as the processes of Steps S301 and after of Fig. 28, further explanation of the processes performed in Steps S351 and after is omitted.

Hence, the sixth embodiment of the present invention can attain the same advantages as the fourth embodiment even in a case where the external service providing system 2030A includes the reverse-multilingual association data.

Although Fig. 23 illustrates a job execution screen in which multiple buttons are plotted from the job setting data of a single spreadsheet, the buttons may be plotted from job setting data obtained from multiple spreadsheets.

In the fourth to sixth embodiments, the administrator is to perform various settings for enabling the image forming apparatus 2012 to obtain job setting data. However, the spreadsheet of the external service providing system 2030 to which job setting data is registered may be a fixed spread sheet. Thereby, the administrator or user can simply input job setting data to the fixed spreadsheet of the external service providing system 2030 (to which job setting data is registered), so that the image forming apparatus 2012 can execute a job according to the input job setting data.

In the fourth to sixth embodiments, job setting data is obtained from the external service providing system 2030 after the user instructs the image forming apparatus 2012 to obtain a job execution screen. However, the timing for obtaining the job setting data is not limited to the timing when the user instructs to obtain a job execution screen. For example, the job setting data may be obtained whenever reaching a predetermined time (at predetermined intervals) or whenever the image forming apparatus 2012 is activated.

In the fourth to sixth embodiments, the functions blocks included in the image forming apparatus 2012 and the web service providing apparatus 2022 may be gathered into a single image forming apparatus 2012.

Hence, with the data process system 2001 according to the fourth to sixth embodiments of the present invention, job setting data can be converted into a common language to which job setting data can be reflected even in a case where the job setting data for executing a job by way of the external service providing system 2030 is described in multiple languages. Accordingly, the data process system 2001 of the fourth to sixth embodiments can implement multilingualization of job setting data.

Various aspects of the subject matter described in the fourth to sixth embodiments are set out non-exhaustively in the following numbered clauses:
1. A data process system including an electronic device and one or more data process apparatuses connected to each other via a network, the data process system including:
   an obtaining destination data management unit that manages destination data from which setting data for executing a job of the electronic device is obtained;
   a setting data obtaining unit that obtains the destination data from the obtaining destination data management unit and obtains the setting data from a destination identified by the obtained destination data;
   a language determination unit that obtains the setting data and determines a language of the obtained setting data;
   a converting unit that converts an item and a value included in the setting data obtained from the destination into an item and a value of a common language by using language association data in which an item and a value included in the setting data of one or more languages are associated with the item and the value of the common language, and
   a setting value reflecting unit that controls the content of the job to be executed by the electronic device based on the content of the setting data in which the item and the value of the setting data are converted into the item and the value of the common language.
2. The data process system of clause 1,
   wherein the electronic device includes the setting data obtaining unit, the language determination unit, the converting unit, and the setting data reflecting unit, and
   wherein the electronic device is configured to control the content of the job based on the content of the setting data in which the item and the value of the setting data are converted into the item and the value of the common language.
3. The data process system of clause 1,
   wherein the data process apparatus includes the obtaining destination data management unit, the setting data obtaining unit, the language determination unit, and the converting unit, and
   wherein a setting data reflecting unit of the electronic device is configured to receive the setting data in which the item and the value of the setting data are converted into the item and the value of the common language and control the content of the job based on the content of the received setting data.
4. The data process system of clause 3,
   wherein the data process apparatus includes a language association data management unit that stores language association data in which the item and the value included in the setting data of the one or more languages are associated with the item and the value of the common language.
5. The data process system of clause 3, wherein the data process apparatus further includes a language association data obtaining unit that obtains the language association data from a destination of the language association data in which the item and the value included in the setting data of the one or more languages are associated with the item and the value of the common language.
6. The data process system of clause 5, wherein the language association data obtaining unit is configured to obtain the language association data stored in another data process apparatus besides the one or more data process apparatuses from the another data process apparatus.
7. An electronic device connected to one or more data process apparatuses via a network, the electronic device including:
   an obtaining destination data management unit that manages destination data from which setting data for executing a job of the electronic device is obtained;
   a setting data obtaining unit that obtains the destination data from the obtaining destination data management unit and obtains the setting data from a destination identified by the obtained destination data;
   a language determination unit that obtains the setting data and determines a language of the obtained setting data;
   a converting unit that converts an item and a value included in the setting data obtained from the destination into an item and a value of a common language by using language association data in which an item and a value included in the setting data of one or more languages are associated with the item and the value of the common language, and
   a setting value reflecting unit that controls the content of the job to be executed by the electronic device based on the content of the setting data in which the item and the value of the setting data are converted into the item and the value of the common language.
8. A program for causing an electronic device connected to one or more data process apparatuses via a network to function as:
   an obtaining destination data management unit that manages destination data from which setting data for executing a job of the electronic device is obtained;
   a setting data obtaining unit that obtains the destination data from the obtaining destination data management unit and obtains the setting data from a destination identified by the obtained destination data;
   a language determination unit that obtains the setting data and determines a language of the obtained setting data;
   a converting unit that converts an item and a value included in the setting data obtained from the destination into an item and a value of a common language by using language association data in which an item and a value included in the setting data of one or more languages are associated with the item and the value of the common language, and
   a setting value reflecting unit that controls the content of the job to be executed by the electronic device based on the content of the setting data in which the item and the value of the setting data are converted into the item and the value of the common language.

The present invention is not limited to the specifically disclosed embodiments, and variations and modifications may be made without departing from the scope of the present invention.

For example, the image forming apparatus 2012 is one example of the electronic device in the above-described clauses. Further, the web service providing apparatus 2022 is an example of the one or more data process apparatus.

The external service management unit 2072 is an example of the obtaining destination data management unit. The job setting obtaining unit 2058 is one example of the setting data obtaining unit. The language data determining unit 2062 is one example of the language determining unit. The reverse-multilingual associating unit 2060 is one example of the converting unit. The job setting reflecting unit 2054 is one example of the setting data reflecting unit.

The reverse-multilingual association data management unit 2077 is one example of the language association data management unit. The reverse-multilingual association data obtaining unit 2079 is one example of the language association data obtaining unit. The external service providing system 2030A is one example of another data process apparatus besides the one or more data process apparatuses.

The MFP 10 is one example of the electronic device. The web application server apparatus 14 is one example of the one or more data process apparatuses.

The localization data obtaining unit 33 is one example of the obtaining unit. The localization data reflecting unit 30 is one example of the reflecting unit. The web page management unit 31 is one example of the management unit. The spreadsheet 1000 including one or more worksheets is one example of a spreadsheet including one or more sheets. The web application server apparatus 14 is one example of the data process apparatus that provides screen data to a browser installed in an electronic device.

## Claims

1. A data process system including one or more data process apparatuses that provides screen data to a browser installed in an electronic device for displaying a screen on the electronic device, the data process system comprising:
an obtaining unit configured to obtain localization data corresponding to designated language data from an external service providing system that stores localization data associated with language data,
a providing unit configured to provide the screen data and the localization data to the browser, and
a reflecting unit configured to cause the browser to reflect the localization data to the screen data and display the screen in accordance with the reflected screen data.

2. The data process system as claimed in claim 1,
wherein, in a case of receiving a request to obtain the screen data from the browser, the obtaining unit is configured to provide a script instructing the browser to obtain language data that is set to the electronic device, obtain the language data from the browser, designate the language data, and request to obtain the localization data corresponding to the designated language data from the external service providing system.

3. The data process system as claimed in claim 1 or claim 2, wherein, in a case where the localization data corresponding to the designated language data cannot be obtained from the external service providing system, the obtaining unit is configured to obtain localization data corresponding to default language data from the external service providing system.

4. The data process system as claimed in one of claims 1 to 3,
wherein the external service providing system includes a spreadsheet including one or more sheets,
wherein the external service providing system is configured to manage the localization data associated to the language data with respect to each of the one or more sheets, and
wherein the localization data includes data for identifying a first message defined in the screen data and a second message corresponding to the language data to be displayed on the browser, and
wherein the external service providing system is configured to manage the data for identifying the first message in association with the second message.

5. The data process system as claimed in one of claims 1 to 4, wherein the localization data includes data that allows software to be adapted to various languages and regions by way of a single program.

6. A data process apparatus for providing screen data to a browser installed in an electronic device for displaying a screen on the electronic device, the data process apparatus comprising:
an obtaining unit configured to obtain localization data corresponding to designated language data from an external service providing system that manages localization data associated with language data, and
a providing unit configured to provide the screen data and the localization data to the browser,
wherein the browser is configured to reflect the localization data to the screen data and display the screen in accordance with the reflected screen data.

7. The data process apparatus as claimed in claim 6, wherein the localization data includes data that allows software to be adapted to various languages and regions by way of a single program.

8. A data process method for providing screen data to a browser installed in an electronic device for displaying a screen on the electronic device, the data process method comprising:
obtaining localization data corresponding to designated language data from an external service providing system that stores localization data associated with language data;
providing the screen data and the localization data to the browser;
reflecting the localization data to the screen data by way of the browser; and
displaying the screen, by way of the browser, in accordance with the reflected screen data.

9. The data process method as claimed in claim 8, wherein the localization data includes data that allows software to be adapted to various languages and regions by way of a single program.
